# EUROPÄISCHE PATENTSCHRIFT

(11) **EP 2 842 846 B1**
(45) Veröffentlichungstag und Bekanntmachung des Hinweises auf die Patenterteilung: **06.04.2016**
(21) Anmeldenummer: 14182294.0
(22) Anmeldetag: 26.08.2014
(51) Int. Cl.: B62H 5/14

(54) **Rahmenschloss**
Frame lock
Antivol de cadre

(30) Priorität: 27.08.2013 DE 102013217075
(43) Veröffentlichungstag der Anmeldung: 04.03.2015
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- DE-A1-102008 020 950
- DE-A1-102010 008 053
- DE-A1-102010 008 054

## Beschreibung

Die vorliegende Erfindung betrifft ein Rahmenschloss für ein Zweirad mit einer elektrischen Antriebseinrichtung, einer Übertragungseinrichtung und einem drehbar gelagerten Drehbügel, der von der Antriebseinrichtung über die Übertragungseinrichtung zwischen einer Offenstellung und einer Geschlossenstellung verstellbar ist, gemäß Dokument DE 102010008053.

Zur Sicherung von Zweirädern gegen Diebstahl können neben separaten Schlössern, wie etwa Kabel-, Ketten- oder Bügelschlössern, insbesondere auch Rahmenschlösser verwendet werden. Diese sind in der Regel mit dem Rahmen des Zweirades verbunden und können in der genannten Geschlossenstellung zwischen Speichen oder durch sonstige Öffnungen eines Rades des Zweirades eingreifen und so eine Drehung des Rades blockieren. Im Wesentlichen können dabei zwei Arten von Rahmenschlössern unterschieden werden: Rahmenschlösser mit einem Schwenkbügel, der zwischen die Speichen eines Rades eingeschwenkt werden kann, und Rahmenschlösser mit einem Drehbügel, der im Wesentlichen kreisbogenförmig ist und entlang einer durch diesen Kreisbogen definierten Kreisbahn zwischen die Speichen des Rades eingedreht werden kann.

Derartige Rahmenschlösser können manuell betätigbar sein. Zur Erhöhung des Bedienkomforts kann die Betätigung des Rahmenschlosses allerdings auch automatisiert werden. Dazu kann insbesondere eine elektrische Antriebseinrichtung in dem Rahmenschloss vorgesehen sein, die beispielsweise von einer Batterie mit Energie versorgt wird. Insbesondere bei den zunehmend verbreiteten elektrisch angetriebenen Fahrrädern braucht diese Batterie nicht in dem Rahmenschloss integriert zu sein, sondern es kann für die Energieversorgung der Antriebseinrichtung des Rahmenschlosses auch eine Batterie des elektrischen Fahrrades genutzt werden.

Zur Übertragung einer Verstellbewegung der Antriebseinrichtung auf den Drehbügel kann eine Übertragungseinrichtung vorgesehen sein. Diese muss geeignet sein, die Verstellbewegung, die etwa bei einem Elektromotor typischerweise eine Drehverstellbewegung ist, derart umzulenken, dass der Drehbügel entlang der genannten Kreisbahn verstellt wird. Zugleich muss aufgrund der Funktion als Schloss durch die Art der Übertragung und/oder durch gesonderte Einrichtungen gewährleistet sein, dass der Drehbügel nicht durch Manipulation von außen, d.h. insbesondere anders als mittels der Antriebseinrichtung, verstellt werden kann.

Der Aufbau eines Rahmenschlosses unterliegt typischerweise starken konstruktiven Beschränkungen. Damit das Rahmenschloss möglichst unauffällig und wenig störend am Rahmen des Zweirades angebracht werden kann, ist es vorzugsweise besonders kompakt aufgebaut. Dabei kann das Gehäuse eines Rahmenschlosses im Wesentlichen kreisbogenförmig ausgebildet sein, wobei der Kreisbogen an einer Seite durchbrochen ist, damit durch diese Durchbrechung die Speichen des Rades rotieren können. Durch Drehen des Drehbügels in seine Geschlossenstellung kann dann die genannte Durchbrechung verschlossen werden, so dass das Rahmenschloss im Wesentlichen ringförmig geschlossen ist und das Rad gegen ein Drehen sperrt.

Gegenüber der Durchbrechung ist das Gehäuse erweitert und bildet einen Aufnahmeraum für interne Elemente des Rahmenschlosses, wie etwa die elektrische Antriebseinrichtung und die Übertragungseinrichtung. Der in dem Aufnahmeraum zur Verfügung stehende Platz ist durch seine Form stark eingeschränkt. Dabei ergibt sich insbesondere das Problem, dass trotz des geringen zur Verfügung stehenden Platzes der Drehbügel entlang seiner Kreisbahn vergleichsweise weit, beispielsweise um etwa eine Viertelumdrehung, zwischen der Offenstellung und der Geschlossenstellung verstellt werden können muss.

Es ist daher eine Aufgabe der Erfindung, ein Rahmenschloss für ein Zweirad bereitzustellen, das komfortabel automatisiert betrieben werden kann, besonders zuverlässig ist und dennoch besonders kompakt ausgebildet ist.

Die Aufgabe wird gelöst durch ein Rahmenschloss mit den Merkmalen des Anspruchs 1 und insbesondere dadurch, dass die Übertragungseinrichtung zumindest einen schwenkbaren Koppelhebel umfasst, der eine variable antriebswirksame Länge aufweist.

Mit anderen Worten ist zumindest ein Bestandteil der Übertragungseinrichtung, nämlich der genannte Koppelhebel, in seiner antriebswirksamen Länge veränderlich. Diese Längenvariabilität wirkt sich insbesondere insofern vorteilhaft aus, als durch sie der Verstellweg des Drehbügels im Verhältnis zum Ausmaß der Verstellbewegung der Antriebseinrichtung trotz eingeschränkten Platzes im Inneren des Rahmenschlosses vergleichsweise lang sein kann. Die antriebswirksame Länge des Koppelhebels kann nämlich insbesondere gerade dort besonders lang sein, wo der im Gehäuse des Rahmenschlosses zur Verfügung stehende Platz es zulässt, und dort vergleichsweise kurz, wo der Koppelhebel beengte Bereiche des Rahmenschlosses durchläuft. Ein Koppelhebel konstanter Länge wäre dagegen durch die engen Bereiche auf eine kurze maximale Länge beschränkt, so dass der eigentlich vorhandene Platz nicht hinreichend ausgenutzt würde.

Die Längenänderung des Koppelhebels erfolgt nicht notwendigerweise unmittelbar durch die Antriebseinrichtung angetrieben, sondern ergibt sich vorzugsweise aus den Bewegungsfreiheitsgraden des Koppelhebels und somit lediglich mittelbar aus der Verstellbewegung der Antriebseinrichtung. Die elektrische Antriebseinrichtung ist insbesondere eine Drehantriebseinrichtung, deren Drehbewegung auf den Koppelhebel übertragen und über die gesamte Übertragungseinrichtung zu einem Verstellen des Drehbügels abgeleitet wird. Dabei dient die Übertragungseinrichtung der mechanischen Übertragung der Verstellbewegung der Antriebeinrichtung auf den Drehbügel, wobei die Übertragungseinrichtung eine Änderung der Richtung, des Verlaufs und des Ausmaßes der Bewegung bewirken kann. Eine selbständige Bewegungserzeugung im Sinne einer Antriebseinrichtung wird durch die Übertragungseinrichtung dagegen nicht bewirkt.

Der Koppelhebel kann sich beispielsweise im Wesentlichen radial zu einer Drehachse der Drehbewegung der Antriebseinrichtung erstrecken und von der Antriebseinrichtung um diese Drehachse verschwenkbar sein. Angepasst an den zur Verfügung stehenden Platz im Inneren des Rahmenschlosses kann der Koppelhebel dann in bestimmten Winkelausrichtungen eine längere antriebswirksame Länge einnehmen als in andere Richtungen, um so den zur Verfügung stehende Platz besonders gut auszunutzen.

Für die Übertragung der Verstellbewegung der Antriebseinrichtung ist nicht die tatsächliche Länge, sondern die antriebswirksame Länge des Koppelhebels entscheidend, d.h. der Abstand zwischen einem Eingangspunkt einer auf den Koppelhebel übertragenen Bewegung und dem Ausgangspunkt, an dem der Koppelhebel diese Bewegung auf ein weiteres Element überträgt. Beispielsweise kann der Eingangspunkt die genannte Drehachse des Koppelhebels sein, an der der Koppelhebel antriebswirksam mit der Antriebseinrichtung gekoppelt ist und um die der Koppelhebel schwenkbar ist. Der Ausgangspunkt kann ein Anlenkungspunkt des Koppelhebels sein, an dem der Koppelhebel mit einem weiteren Element der Übertragungseinrichtung oder direkt mit dem Drehbügel antriebswirksam gekoppelt ist. Die antriebswirksame Länge ist insofern von der tatsächlichen Form des Koppelhebels, also dessen Verlauf oder dessen Erstreckung im Raum, zu unterscheiden.

Gemäß einer vorteilhaften Ausführungsform ist der Koppelhebel zumindest zweiteilig mit einer Schieberführung und einem in der Schieberführung geführten Schieber ausgebildet. Eine derartige Ausgestaltung des Koppelhebels ist konstruktiv besonders einfach und ermöglicht die genannte Variabilität der antriebswirksamen Länge des Koppelhebels. Beispielsweise können die Schieberführung und der Schieber zueinander komplementäre Profile aufweisen, so dass das Profil des Schiebers in dem Profil der Schieberführung aufgenommen und darin, insbesondere linear, versetzt werden kann. Vorzugsweise sind der Schieber und die Schieberführung derart ausgebildet, dass der Schieber in Richtung der antriebswirksamen Länge des Koppelhebels längsbeweglich in der Schieberführung geführt wird.

Weiterhin ist es vorteilhaft, wenn die antriebswirksame Länge des Koppelhebels von einer Winkelausrichtung des Koppelhebels innerhalb einer Normalebene zu einer Drehachse der Antriebseinrichtung abhängig ist. Dabei ist die Winkelausrichtung in Bezug auf das ortsfeste Gehäuse zu verstehen. Insbesondere kann der Koppelhebel innerhalb der genannten Normalebene durch die Antriebseinrichtung in verschiedene Winkelausrichtungen verschwenkt werden. Die dabei von dem Koppelhebel eingenommene antriebswirksame Länge hängt dann von der jeweiligen Winkelausrichtung ab, verändert sich also insbesondere während eines Verschwenkens des Koppelhebels durch die Antriebseinrichtung.

Beispielsweise kann der Koppelhebel von der Antriebseinrichtung zu einer Schwenkbewegung um eine Drehachse angetrieben werden und einen Anlenkungspunkt zur Kopplung mit dem Drehbügel oder mit einem weiteren Element der Übertragungseinrichtung aufweisen. Der Abstand zwischen der Drehachse und dem genannten Anlenkungspunkt definiert dann die antriebswirksame Länge des Koppelhebels. Bei einem Koppelhebel mit konstanter Länge würde der Anlenkungspunkt eine Kreisbahn beschreiben, deren Radius auf den (zumindest innerhalb des durch die Drehung überstrichenen Winkelbereichs) geringsten Abstand der Drehachse von dem Gehäuse des Rahmenschlosses eingeschränkt wäre. Aufgrund der variablen Länge des Koppelhebels kann aber die durch den Anlenkungspunkt des Koppelhebels zurückgelegte Strecke dadurch vergrößert werden, dass in Winkelbereichen, in denen dies aufgrund des zur Verfügung stehenden Raumes möglich ist, der Radius und somit die antriebswirksame Länge vergrößert werden, so dass der Anlenkungspunkt eine wesentlich längere Strecke zurücklegen kann. Diese Strecke kann dabei abschnittsweise kreisbogenförmig und/oder linear sein.

Insbesondere kann eine Zwangsführungseinrichtung vorgesehen sein, durch welche die antriebswirksame Länge des Koppelhebels in Abhängigkeit von der Winkelausrichtung des Koppelhebels festgelegt ist. Beispielsweise kann die Zwangsführungseinrichtung als Kulissenführung mit einem in einer Nut oder einem Langloch geführten Zapfen ausgebildet sein. Dabei kann der Zapfen etwa an dem genannten Schieber des Koppelhebels vorgesehen sein. In diesem Fall kann der Zapfen insbesondere im Wesentlichen dem genannten Anlenkungspunkt des Koppelhebels entsprechen, so dass der Verlauf der Nut oder des Langlochs den Verlauf des Anlenkungspunkts bei einer Verstellbewegung der Antriebseinrichtung vorgibt. Zudem kann der Zapfen zugleich auch der Kopplung des Koppelhebels mit einem weiteren Element der Übertragungseinrichtung oder mit dem Drehbügel dienen. Wenn der Zapfen an dem Koppelhebel angeordnet ist, kann die Nut oder das Langloch in dem Gehäuse des Rahmenschlosses vorgesehen sein. Umgekehrt können aber auch der Zapfen an dem Gehäuse angeordnet und die Nut oder das Langloch an dem Koppelhebel vorgesehen sein. Eines der Elemente, Zapfen bzw. Nut oder Langloch, ist jedenfalls vorzugsweise gehäusefest ausgebildet.

Gemäß einer weiteren Ausführungsform weist die Übertragungseinrichtung ferner einen Verbindungshebel auf, der mit dem Koppelhebel gelenkig verbunden ist. Diese gelenkige Verbindung kann insbesondere an dem genannten Anlenkungspunkt erfolgen. Dabei ist der Verbindungshebel insbesondere zwischen dem Koppelhebel und dem Drehbügel angeordnet. Bevorzugt ist der Verbindungshebel dabei sowohl mit dem Koppelhebel als auch mit dem Drehbügel gelenkig verbunden. Die Übertragung der Verstellbewegung der Antriebseinrichtung erfolgt demnach von der Antriebseinrichtung auf den Koppelhebel, von dem Koppelhebel auf den Verbindungshebel und von dem Verbindungshebel auf den Drehbügel.

Insoweit der Drehbügel auf Drehbewegungen entlang der durch seine Form definierten Kreisbahn eingeschränkt ist, kann auch der Anlenkungspunkt, an dem die Übertragungseinrichtung an dem Drehbügel angreift, lediglich entlang dieser Kreisbahn versetzt werden. Bei einer direkten Kopplung des Koppelhebels mit dem Drehbügel müsste also der genannte Anlenkungspunkt des Koppelhebels entlang dieser Kreisbahn verlaufen. Durch den genannten Verbindungshebel kann der Anlenkungspunkt des Koppelhebels dagegen auch andere Bewegungsbahnen durchlaufen, die vorteilhafterweise eine umfangreichere Verstellbewegung des Drehbügels und/oder etwa eine Sicherung der Geschlossenstellung des Drehbügels durch Selbsthemmung nach Überwinden eines Totpunktes (wie im Folgenden noch ausführlicher erläutert werden wird) ermöglichen.

Grundsätzlich können mehrere zwischen dem Koppelhebel und dem Drehbügel angeordnete Verbindungshebel nach Art einer Gelenkanordnung vorgesehen sein. Genau einen Verbindungshebel vorzusehen, ist konstruktiv besonders einfach und zudem kostengünstig.

Gemäß einer bevorzugten Ausführungsform sind der Koppelhebel und der Verbindungshebel dazu angepasst, bei einem Verstellen des Drehbügels aus der Offenstellung in die Geschlossenstellung ausgehend von einer Antriebsausrichtung einen Totpunkt zu durchlaufen und sodann eine Blockierausrichtung relativ zueinander einzunehmen. Die Antriebsausrichtung des Koppelhebels und des Verbindungshebels entspricht dabei im Wesentlichen der Offenstellung des Drehbügels. Die Blockierausrichtung des Koppelhebels und des Verbindungshebels entspricht im Wesentlichen der Geschlossenstellung des Drehbügels.

Der Totpunkt ist insbesondere auf eine von dem Drehbügel ausgehende Kraft bezogen, wie sie etwa bei einem Manipulationsversuch an den Drehbügel auf die Übertragungseinrichtung einwirkt. Die Anordnung aus Koppelhebel und Verbindungshebel nimmt dabei einen Totpunkt dann ein, wenn der Anlenkungspunkt, an dem der Verbindungshebel mit dem Drehbügel gekoppelt ist, der weitere Anlenkungspunkt, an dem der Verbindungshebel mit dem Koppelhebel gekoppelt ist, und die Drehachse des Koppelhebels auf einer Linie liegen und eine auf den Drehbügel ausgeübte Kraft im Wesentlichen entlang dieser Linie auf die genannte Anordnung aus Verbindungshebel und Koppelhebel übertragen würde. Eine solche Kraft ist insbesondere im Wesentlichen tangential zur Kreisbogenform des Drehbügels ausgerichtet.

Ein derartiger Totpunkt stellt insofern eine instabile Ausrichtung der Anordnung aus Koppelhebel und Verbindungshebel dar. Denn diese Anordnung kann bei einer entlang der genannten Linie auf die Anordnung einwirkenden Kraft zu der einen Seite (in Richtung der stabilen Antriebsausrichtung) oder zu der anderen Seite (in Richtung der stabilen Blockierausrichtung) gleichermaßen ausweichen. Befindet sich dagegen die genannte Anordnung auf der einen oder der anderen Seite des Totpunktes, ist ein Erreichen der jeweils anderen Seite über den Totpunkt hinweg zumindest mittels einer Krafteinwirkung auf den Drehbügel nicht möglich. Insbesondere ist ein Erreichen der jeweils anderen Seite über den Totpunkt hinweg lediglich angetrieben durch die Antriebseinrichtung möglich.

Folglich kann die genannte Anordnung aus ihrer Blockierausrichtung, die der Geschlossenstellung des Drehbügels entspricht, vorteilhafterweise nicht durch äußere Krafteinwirkung auf den Drehbügel in die Antriebsausrichtung überführt werden. Somit ist das Rahmenschloss besonders gut gegen Manipulationsversuche geschützt, bei denen versucht wird, den Drehbügel mit Gewalt aus seiner Geschlossenstellung herauszudrängen.

Der genannte Totpunkt ist bei den geschilderten Ausführungsformen in Bezug auf den Verbindungshebel und den Koppelhebel beschrieben. Bei anderen Ausführungsformen, bei denen die Übertragungseinrichtung mehrere Verbindungshebel nach Art einer Gelenkanordnung aufweist, können sich auch durch andere bzw. mehrere Verbindungshebel und deren jeweilige Anlenkungspunkte andere, insbesondere auch mehrere, Totpunkte mit denselben dargelegten Vorteilen ergeben.

Gemäß einer Weiterbildung nehmen der Koppelhebel und der Verbindungshebel in der Antriebsausrichtung einen Winkel von weniger als 180° relativ zueinander und in der Blockierausrichtung einen Winkel von mehr als 180° relativ zueinander ein. Der genannte Winkel ist dabei in Bezug auf die antriebswirksame Längsachse des Koppelhebels und die antriebswirksame Längsachse des Verbindungshebels definiert. Diese Längsachsen entsprechen im Wesentlichen der Erstreckung zwischen den jeweiligen Anlenkungspunkten, an denen der Koppelhebel und der Verbindungshebel mit weiteren Elementen, insbesondere der Antriebseinrichtung bzw. dem Drehbügel, gekoppelt sind. Eine Ausrichtung des Koppelhebels und des Verbindungshebels von gerade 180° relativ zueinander entspricht dann im Wesentlichen dem genannten Totpunkt dieser Anordnung.

Gemäß einer weiteren Ausführungsform sind der Koppelhebel und der Verbindungshebel dazu angepasst, in der Blockierausrichtung den Drehbügel gegen ein Versetzen aus der Geschlossenstellung in Richtung der Offenstellung zu sperren. Diese Sperrung betrifft nicht das von der Antriebseinrichtung angetriebene Drehen des Drehbügels, sondern wirkt insbesondere gegen ein von dem Drehbügel ausgehendes Versetzen des Drehbügels, etwa wenn versucht wird, den Drehbügel von außen in das Gehäuse des Rahmenschlosses zu drängen. Dabei kann insbesondere die Blockierausrichtung des Koppelhebels und des Verbindungshebels selbsthemmend ausgebildet sein, so dass gerade das Zusammenwirken des Koppelhebels und des Verbindungshebels eine Änderung der relativen Winkelausrichtung zwischen dem Koppelhebel und dem Verbindungshebel in Richtung der Antriebsausrichtung verhindert. Diese Selbsthemmung der Anordnung aus Koppelhebel und Verbindungshebel trägt vorteilhafterweise zur Sicherung des Drehbügels in dessen Geschlossenstellung bei.

Bei den genannten Arten der Sicherung des Drehbügels in seiner Geschlossenstellung, etwa durch Überwindung eines Totpunkts und/oder durch die Selbsthemmung des Verbindungshebels und des Koppelhebels in deren Blockierausrichtung, ist der Drehbügel jeweils gegen ein Verstellen aus der Geschlossenstellung in Richtung der Offenstellung gesperrt, wenn dieses Verstellen von dem Drehbügel selbst ausgeht - wie es insbesondere bei Manipulationsversuchen der Fall ist. Dabei wird jeweils ausgenutzt, dass bei einem derartigen Manipulationsversuch die vom Drehbügel auf die Übertragungseinrichtung übertragene Kraft spezifisch ausgerichtet ist und dass eine derartige Kraftausrichtung nicht zur Überwindung des Totpunkts und/oder der Selbsthemmung führen kann.

Bei einer Krafteinwirkung in andere Richtung hingegen können der Koppelhebel und der Verbindungshebel ungehindert aus der Blockierausrichtung in die Antriebsausrichtung bewegt werden. Dies ist insbesondere der Fall, wenn die Antriebseinrichtung die Übertragungseinrichtung zu einer Bewegung antreibt, durch die der Drehbügel aus der Geschlossenstellung in die Offenstellung verstellt werden soll. Vorteilhafterweise kann also die Übertragungseinrichtung einerseits einen reibungslosen Ablauf des von der Antriebseinrichtung angetriebenen Verstellens des Drehbügels sowohl in die Geschlossenstellung als auch in die Offenstellung bewirken und andererseits zugleich ein vom Drehbügel ausgehendes Verstellen des Drehbügels, zumindest aus dessen Geschlossenstellung in Richtung der Offenstellung, auf einfache Weise verhindern, ohne dass dazu zusätzliche Einrichtungen zwingend erforderlich wären. Es ist jedoch nicht ausgeschlossen, dass zur Erhöhung der Sicherheit auch weitere Einrichtungen zum Sperren des Drehbügels in einer bestimmten Stellung, insbesondere in der Geschlossenstellung, vorgesehen sein können, wie im Folgenden noch erläutert wird.

Weiterhin ist es vorteilhaft, wenn das Rahmenschloss eine Anschlageinrichtung aufweist, die in der Blockierausrichtung des Koppelhebels und des Verbindungshebels in Verlängerung des Verbindungshebels angeordnet ist und dazu angepasst ist, den Verbindungshebel gegen ein Versetzen entlang seiner Längserstreckung zu blockieren. Die genannte Anschlageinrichtung kann insbesondere ein Teil des Gehäuses des Rahmenschlosses sein. Die Anschlageinrichtung ist dabei bezogen auf eine Längserstreckung des Verbindungshebels, die im Wesentlichen durch Anlenkungspunkte des Verbindungshebels definiert wird, derart entlang dieser Längserstreckung bzw. einer Verlängerung dieser Längserstreckung angeordnet, dass sie geeignet ist, als Anschlag eine Bewegung des Verbindungshebels in Richtung der Längserstreckung zu sperren. Dabei muss die Anschlageinrichtung nicht unmittelbar in Kontakt mit dem Verbindungshebel sein, sondern es kann ein gewisser Spalt zwischen der Anschlageinrichtung und dem Verbindungshebel vorgesehen sein, durch den ein mechanisches Spiel in Richtung der Längserstreckung ermöglicht wird. Dieses Spiel ist aber insbesondere derart gering, dass nach Schließen des Spalts der Drehbügel weiterhin im Wesentlichen in der Geschlossenstellung verbleibt und insbesondere das Rahmenschloss weiterhin ringförmig geschlossen ist.

Gemäß einer Weiterbildung weist der Verbindungshebel einen Anschlagabschnitt auf, der dazu angepasst ist, an der Anschlageinrichtung anzuschlagen, wenn der Koppelhebel und der Verbindungshebel sich in der Blockierausrichtung befinden und der Drehbügel aus der Geschlossenstellung in Richtung der Offenstellung gedrängt wird. Der Anschlagabschnitt kann insbesondere derart komplementär zu der Anschlageinrichtung ausgebildet sein, dass durch das Zusammenwirken des Anschlagabschnitts und der Anschlageinrichtung die Sperrwirkung gegen ein Drängen des Drehbügels aus der Geschlossenstellung heraus noch verstärkt wird. Beispielsweise kann der Anschlagabschnitt der Rand einer Ausnehmung und/oder eine Stirnseite an dem Verbindungshebel sein. Der Anschlagabschnitt kann aber etwa auch als ein hakenförmiger Fortsatz ausgebildet sein, der die, z.B. als Stift ausgebildete, Anschlageinrichtung umgreift, wenn der Anschlagabschnitt an der Anschlageinrichtung anschlägt.

Weiterhin ist es vorteilhaft, wenn das Rahmenschloss ferner ein Riegelelement aufweist, das von der Antriebseinrichtung zwischen einer Verriegelungsstellung und einer Freigabestellung verstellbar ist. Insbesondere kann ein derartiges Riegelelement in der Verriegelungsstellung den Drehbügel gegen ein Verstellen aus der Geschlossenstellung oder gegen ein Verstellen aus der Offenstellung sperren, wobei das Riegelelement auch zumindest zwei Verriegelungsstellungen aufweisen kann, in deren einer es den Drehbügel gegen ein Verstellen aus der Geschlossenstellung sperrt und in deren anderer es den Drehbügel gegen ein Verstellen aus der Offenstellung sperrt. In der zumindest einen Freigabestellung wird der Drehbügel dagegen nicht gesperrt. Das genannte Sperren kann beispielsweise dadurch erfolgen, dass das Riegelelement den Drehbügel hintergreift oder in eine Blockierausnehmung des Drehbügels eingreift. Um zwischen den verschiedenen Stellungen verstellbar zu sein, kann das Riegelelement insbesondere schwenkbar gelagert sein.

Dabei kann in einem ersten Stellbereich der Antriebseinrichtung die Antriebseinrichtung über die Übertragungseinrichtung mit dem Drehbügel, bevorzugt auch mit dem Riegelelement, antriebswirksam gekoppelt sein und in einem zweiten Stellbereich der Antriebseinrichtung von dem Drehbügel trieblich entkoppelt und mit dem Riegelelement antriebswirksam gekoppelt sein. So kann im Verlauf einer gesamten, vorzugsweise kontinuierlichen, Verstellbewegung der Antriebseinrichtung zunächst der eine und dann der andere Stellbereich durchlaufen werden, wobei dann bei einem Übergang zwischen den Stellbereichen eine entsprechende Entkopplung oder Kopplung der Antriebseinrichtung von bzw. mit zumindest dem Drehbügel erfolgt. Insbesondere kann die Antriebseinrichtung bei einem Übergang von dem ersten Stellbereich in den zweiten Stellbereich zwangsgeführt von dem Drehbügel trieblich entkoppelt werden.

Auf diese Weise kann eine einzelne Antriebseinrichtung zum Antrieb zweier funktional separater Einrichtungen verwendet werden: Einerseits treibt die Antriebseinrichtung das Verstellen des Drehbügels zwischen seiner Offenstellung und seiner Geschlossenstellung zum Öffnen und Schließen des Rahmenschlosses an, andererseits treibt die Antriebseinrichtung das Verstellen des Riegelelements zwischen dessen Verriegelungsstellung und dessen Freigabestellung zum Sichern des Rahmenschlosses in offenem und/oder geschlossenem Zustand an.

Das Sichern des Rahmenschlosses in dem geschlossenen Zustand, also das Sperren des Drehbügels in seiner Geschlossenstellung, erfordert insbesondere ein dem Verstellen des Drehbügels in die Geschlossenstellung nachgeordnetes Verstellen des Riegelelements. Ein derartiges nachgeordnetes Verstellen des Riegelelements, während der Drehbügel unverändert in seiner Geschlossenstellung verbleibt, wird gerade durch die genannten Stellbereiche der Antriebseinrichtung mit der Entkopplung bzw. Kopplung des Drehbügels beim Übergang zwischen den Stellbereichen ermöglicht. Ohne dieses Entkoppeln bzw. Koppeln müssten der Drehbügel und das Riegelelement für das genannte nachgeordnete Verstellen auf separate Weise, insbesondere also durch zwei unabhängige Antriebseinrichtungen angetrieben werden. Die Möglichkeit, für das Öffnen und Schließen sowie für das zusätzliche Sichern des Rahmenschlosses lediglich eine einzige Antriebseinrichtung verwenden zu können, führt zu einem besonders kompakten und kostengünstigen Aufbau des Rahmenschlosses.

Generell ist es bevorzugt, wenn die elektrische Antriebseinrichtung einen Elektromotor umfasst, der ein zu einer Drehverstellbewegung antreibbares Ausgangselement aufweist, wobei die Übertragungseinrichtung dazu angepasst ist, eine Drehverstellbewegung des Ausgangselements, die höchstens eine Umdrehung beträgt, in eine vollständige Verstellbewegung des Drehbügels zwischen der Offenstellung und der Geschlossenstellung zu übertragen (d.h. umzuwandeln). Mit anderen Worten vollzieht bei einer derartigen Ausführungsform das Ausgangselement des Elektromotors (z.B. ein Mitnehmer) während eines jeweiligen Verstellbetriebs maximal eine Umdrehung um seine Drehachse, beispielsweise lediglich eine halbe Umdrehung, eine Dreiviertelumdrehung oder eine Umdrehung von nahezu 360°. Die Übertragungseinrichtung des Rahmenschlosses ist (beispielsweise durch die vorstehend erläuterten möglichen Ausgestaltungen) dazu angepasst, aufgrund einer jeweiligen Drehverstellbewegung des Ausgangselements, die höchstens eine Umdrehung beträgt, den Drehbügel gleichwohl vollständig zwischen der Offenstellung und der Geschlossenstellung hin- und herzubewegen.

Alternativ oder zusätzlich kann vorgesehen sein, dass die Antriebseinrichtung einen gekapselten Elektromotor umfasst, der ein zu einer Drehverstellbewegung antreibbares Ausgangselement aufweist, ohne dass bezogen auf den Drehmomentübertragungspfad dem Ausgangselement des Elektromotors ein Zahnradgetriebe nachgelagert ist.

Derartige Ausführungsformen sind besonders vorteilhaft, da insbesondere ein gekapselter (d.h. abgedichteter) Elektromotor ohne frei liegendes Zahnradgetriebe verwendet werden kann, also ohne ein Zahnradgetriebe, welches entlang des Drehmomentübertragungspfades dem Ausgangselement des Elektromotors (z.B. Mitnehmer) nachgelagert und insbesondere zwischen dem Ausgangselement des Elektromotors und dem Drehbügel angeordnet ist. Ein derartiges Zahnradgetriebe, beispielsweise ein Schneckengetriebe, ein Stirnradgetriebe oder auch ein mit dem Drehbügel vereinigtes Zahnstangengetriebe, kann nämlich unerwünscht störanfällig gegenüber Verschmutzungen sein, die in den Innenraum des Gehäuses des Rahmenschlosses gelangen können. Zwar kann in den Elektromotor ein Zahnradgetriebe integriert sein (als sogenannter Getriebemotor). Allerdings ist dies unproblematisch, solange der Elektromotor einschließlich des integrierten Getriebes hinreichend abgedichtet ist. Die Übertragung der Drehverstellbewegung des Ausgangselements auf den Drehbügel wird vorzugsweise mittels der genannten Übertragungseinrichtung bewirkt. Die Übertragungseinrichtung des Rahmenschlosses kann deutlich weniger störanfällig gegenüber Verschmutzungen ausgebildet sein als ein frei liegendes Zahnradgetriebe. Die genannte Übertragungseinrichtung kann insbesondere wenigstens einen Koppelhebel und/oder Verbindungshebel umfassen (jedoch kein Zahnradgetriebe), und die Übertragungseinrichtung kann insbesondere eine Gelenkeinrichtung bilden.

Insofern bezieht sich die vorliegende Erfindung auch unabhängig von der erläuterten Verwendung eines schwenkbaren Koppelhebels, der eine variable antriebswirksame Länge aufweist, ferner auf ein Rahmenschloss für ein Zweirad, mit einer elektrischen Antriebseinrichtung, einer Übertragungseinrichtung und einem drehbar gelagerten Drehbügel, der von der Antriebseinrichtung über die Übertragungseinrichtung zwischen einer Offenstellung und einer Geschlossenstellung verstellbar ist, wobei die elektrische Antriebseinrichtung einen Elektromotor umfasst, der ein zu einer Drehverstellbewegung antreibbares Ausgangselement aufweist, und wobei die Übertragungseinrichtung dazu angepasst ist, eine Drehverstellbewegung des Ausgangselements, die höchstens eine Umdrehung beträgt, in eine Verstellbewegung des Drehbügels zwischen der Offenstellung und der Geschlossenstellung zu übertragen.

Ferner bezieht sich die vorliegende Erfindung unabhängig von der erläuterten Verwendung eines schwenkbaren Koppelhebels, der eine variable antriebswirksame Länge aufweist, auch auf ein Rahmenschloss für ein Zweirad, mit einer elektrischen Antriebseinrichtung und einem drehbar gelagerten Drehbügel, der von der Antriebseinrichtung (vorzugsweise über eine Übertragungseinrichtung) zwischen einer Offenstellung und einer Geschlossenstellung verstellbar ist, wobei die Antriebseinrichtung einen gekapselten Elektromotor umfasst, der ein zu einer Drehverstellbewegung antreibbares Ausgangselement aufweist, ohne dass bezogen auf den Drehmomentübertragungspfad dem Ausgangselement des Elektromotors ein Zahnradgetriebe nachgelagert ist (d.h. ohne dass nach dem Ausgangselement des Elektromotors ein Zahnradgetriebe vorgesehen ist).

Gemäß einer weiteren vorteilhaften Ausführungsform weist das Rahmenschloss eine Klobenaufnahme für einen Kloben eines Sicherungsseils sowie einen Drehriegel auf, der zwischen einer Verriegelungsstellung, in der ein in die Klobenaüfhahme eingeführter Kloben gegen ein Entnehmen gesperrt ist, und einer Freigabestellung schwenkbar ist, in der ein in die Klobenaufnahme eingeführter Kloben für ein Entnehmen freigegeben ist. Dabei ist insbesondere die elektrische Antriebseinrichtung des Rahmenschlosses oder ein hiermit antriebswirksam gekoppeltes Element dazu angepasst, den Drehriegel zu einer Schwenkbewegung in die Freigabestellung anzutreiben, wenn der Drehbügel aus der Geschlossenstellung in die Offenstellung verstellt wird. Bei dem Sicherungsseil kann es sich beispielsweise um ein Drahtseil oder eine Kette handeln.

Die Antriebseinrichtung kann auch umgekehrt dazu angepasst sein, den Drehriegel zumindest mittelbar aus der Freigabestellung zu einer Schwenkbewegung in die Verriegelungsstellung anzutreiben. Vorzugsweise ist der Drehriegel aber in die Verriegelungsstellung vorgespannt, so dass ein angetriebenes Verstellen des Drehriegels in die Verriegelungsstellung nicht erforderlich ist.

Obwohl in der Verriegelungsstellung des Drehriegels ein in die Klobenaufnahme eingeführter Kloben nicht aus der Klobenaufnahme entnommen werden kann, kann vorgesehen sein, dass auch in der Verriegelungsstellung des Drehriegels ein Kloben in die Klobenaufnahme eingeführt werden kann. Der Kloben ist also in der Verriegelungsstellung des Drehriegels insbesondere einrastend in die Klobenaufnahme einführbar. Dadurch kann auch bei geschlossenem Rahmenschloss, wenn der Drehriegel aufgrund der Vorspannung oder eines Verstellens in die Verriegelungsstellung geschwenkt ist, der Kloben mit dem Rahmenschloss verbunden werden und dann gegen ein Entnehmen gesichert sein, bis das Rahmenschloss geöffnet und dabei auch der Drehriegel zu einer Schwenkbewegung in die Freigabestellung angetrieben wird.

Die Erfindung wird nachfolgend lediglich beispielhaft unter Bezugnahme auf die Figuren beschrieben.
- Fig. 1A bis 1B: zeigen eine Ausführungsform des Rahmenschlosses in einer Frontalansicht in einem Zustand, in dem sich der Drehbügel in der Offenstellung befindet.
- Fig. 2A und 2B: zeigen den Fig. 1A und 1B entsprechende Darstellungen derselben Ausführungsform des Rahmenschlosses in einem Zustand, in dem sich der Drehbügel in der Geschlossenstellung befindet.
- Fig. 3A und 3B: zeigen den Fig. 1A und 1B bzw. 2A und 2B entsprechende Darstellungen derselben Ausführungsform des Rahmenschlosses in einem weiteren Zustand, in dem sich der Drehbügel in der Geschlossenstellung befindet und sich ein Riegelelement in einer Verriegelungsstellung befindet.

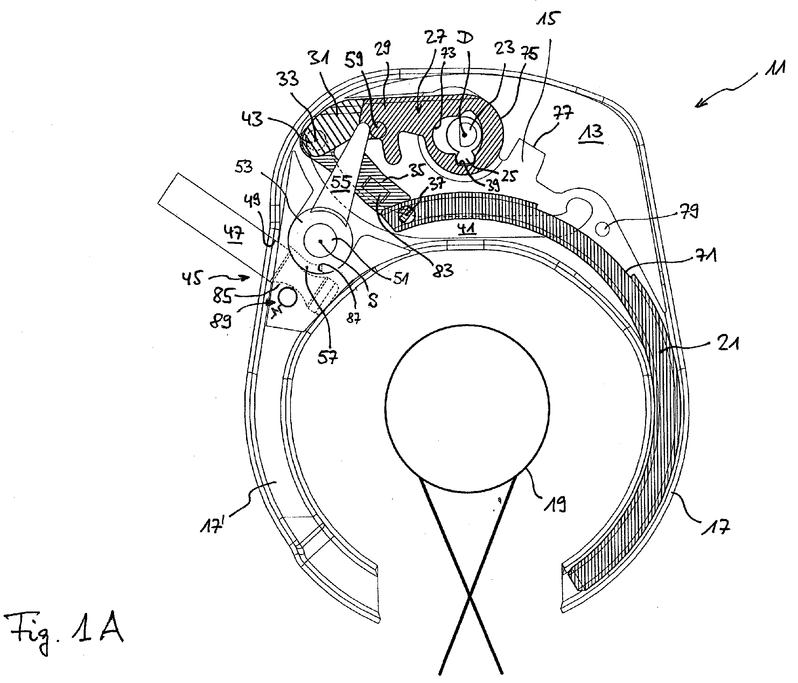

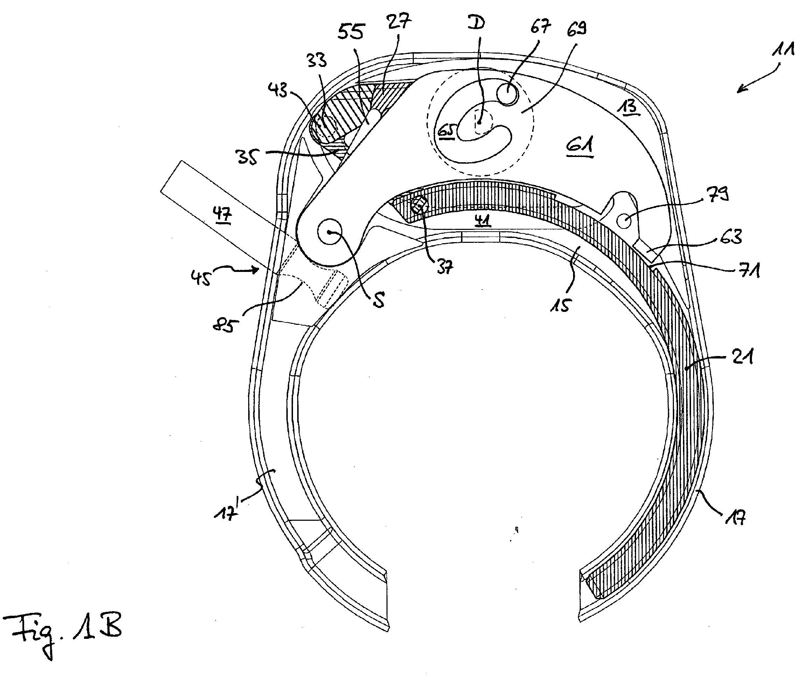

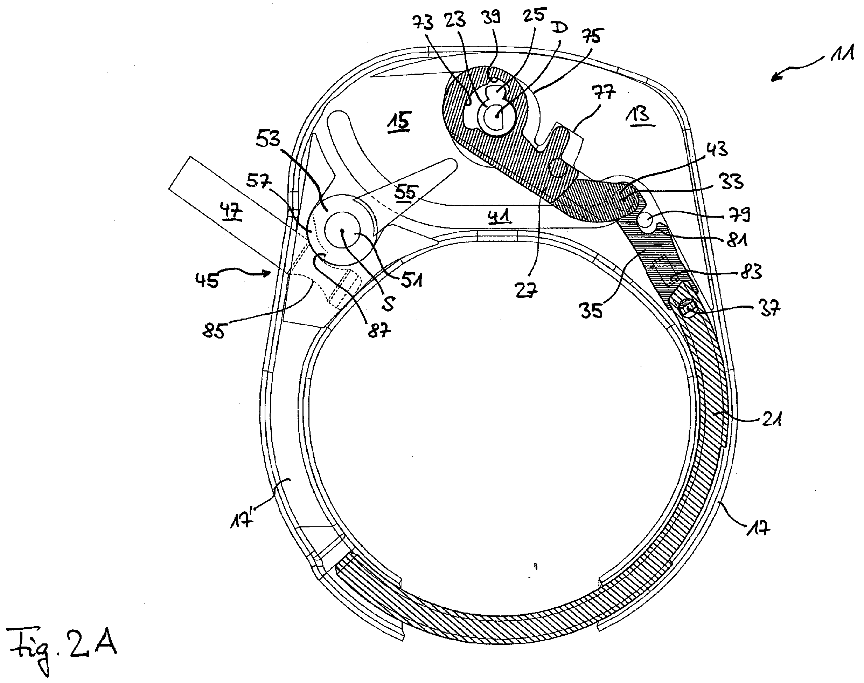

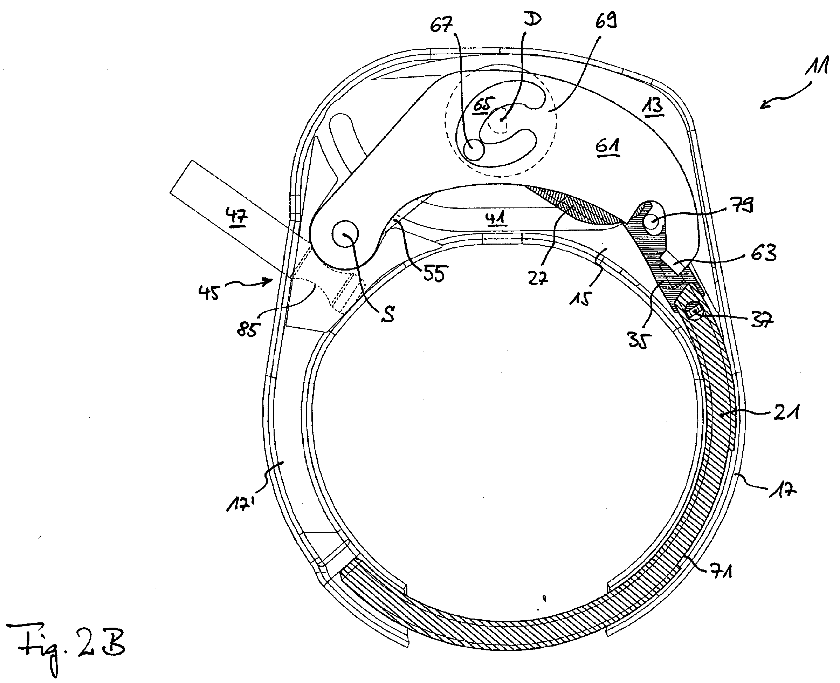

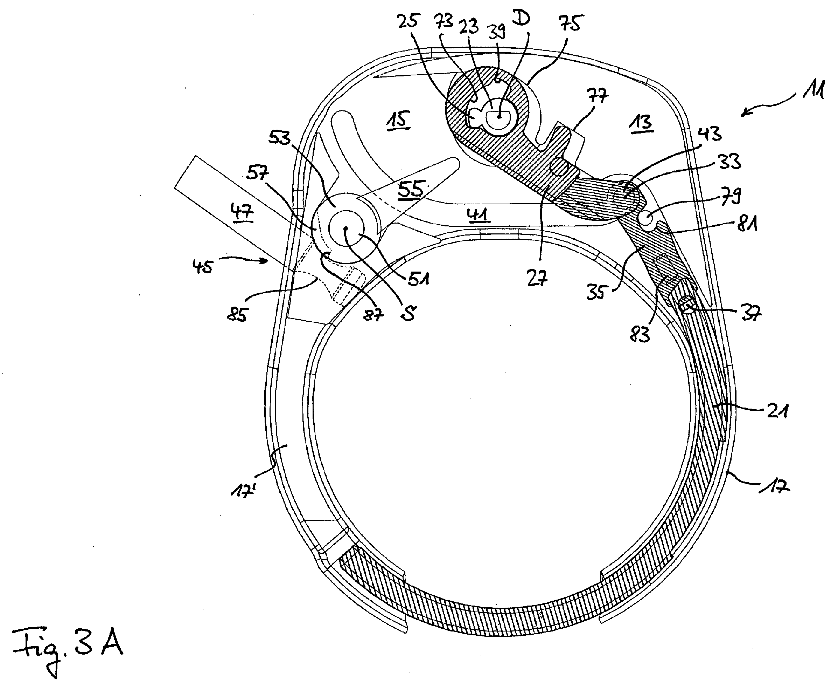

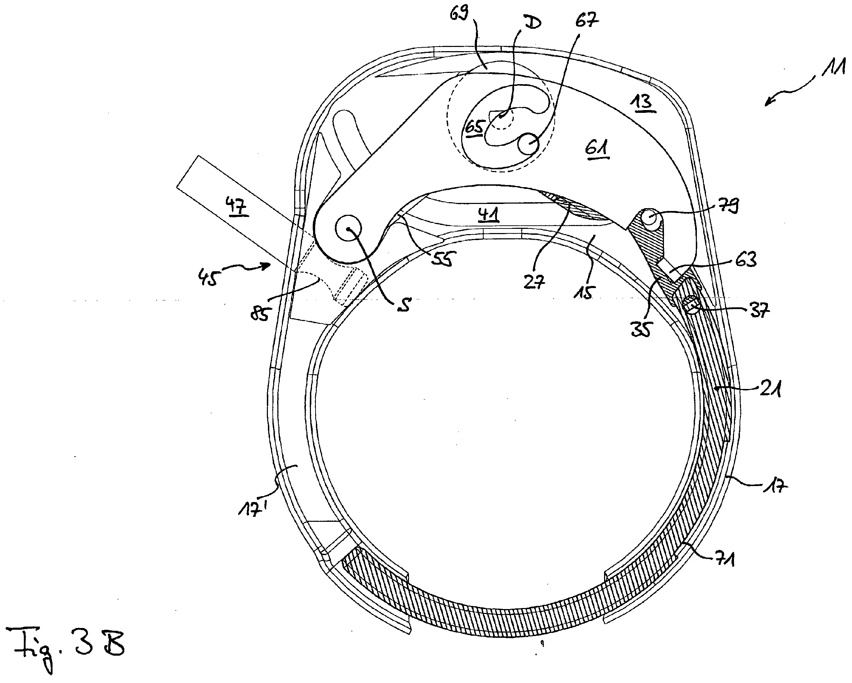

In den Fig. 1A und 1B bis 3A und 3B ist jeweils dieselbe Ausführungsform eines Rahmenschlosses 11 dargestellt. Dabei ist jeweils von einem Gehäuse 13 des Rahmenschlosses 11 nur eine Rückseite dargestellt, damit die in dem Rahmenschloss 11 befindlichen Einzelteile erkennbar sind. Insgesamt werden drei Zustände des Rahmenschlosses 11 dargestellt, wobei die Fig. 1A und 1B übereinstimmend einen ersten Zustand, die Fig. 2A und 2B übereinstimmend einen zweiten Zustand und die Fig. 3A und 3B übereinstimmend einen dritten Zustand des Rahmenschlosses 11 zeigen. Von den Fig. 1A, 2A und 3A unterscheiden sich die Fig. 1B, 2B und 3B jeweils durch die Zahl der dargestellten Elemente des Rahmenschlosses 11. Im Folgenden wird die Fig. 1A ausführlich erläutert. Die übrigen Figuren werden dann insbesondere anhand ihrer Unterschiede zu der Fig. 1A beschrieben.

Das Gehäuse 13 des Rahmenschlosses 11 ist im Wesentlichen torusförmig und hohl ausgebildet, wobei der Torus an einer Seite (in Fig. 1A unten) durchbrochen ist. An der dieser Durchbrechung entgegengesetzten Seite (in Fig. 1A oben) ist die Torusform zu einem Aufnahmeraum 15 erweitert, der verschiedene Elemente des Rahmenschlosses 11 beherbergt. Stark vereinfacht kann das Gehäuse 13 des Rahmenschlosses 11 auch als im Wesentlichen quaderförmiger Aufnahmeraum 15 aufgefasst werden, wobei von zwei Ecken einer Längsseite des Rahmenschlosses 11 bogenförmige Schenkel 17, 17' zur umgreifenden Aufnahme eines Rades 19 (vgl. Fig. 1A) eines Zweirades (nicht gezeigt) ausgehen.

In einem der beiden Schenkel 17 des Gehäuses 13 ist ein kreisbogenförmiger Drehbügel 21 geführt, wobei die Drehbeweglichkeit des Drehbügels 21 auf ein Drehen des Drehbügels entlang einer Kreisbahn eingeschränkt ist, die durch die Kreisbogenform des Drehbügels 21 bzw. die dazu entsprechende Form des Schenkels 17 definiert ist.

In dem in Fig. 1A gezeigten Zustand des Rahmenschlosses 11 befindet sich der Drehbügel 21 in seiner Offenstellung, in der das Rad 19 durch den Drehbügel 21 nicht gesperrt wird. In dieser Offenstellung befindet sich der Drehbügel 21 vollständig innerhalb des Gehäuses 13 des Rahmenschlosses 11. Der Drehbügel 21 beschreibt nahezu einen Halbkreis. Dagegen stellt der den Drehbügel 21 aufnehmende Schenkel 17 lediglich etwa einen Viertelkreis dar. Daher ragt der Drehbügel 21 in der Offenstellung weit in den Aufnahmeraum 15 des Gehäuses 13 hinein.

Der Drehbügel 21 ist aus der gezeigten Offenstellung um etwa 90° um seinen Mittelpunkt in eine in den Fig. 2A bis 3B gezeigte Geschlossenstellurig drehbar. In dieser Geschlossenstellung ragt der Drehbügel 21 aus dem ihn führenden Schenkel 17 somit um etwa einen Viertelkreis herausragt und dringt teilweise in den gegenüberliegenden Schenkel 17' ein, so dass das Rahmenschloss 11 ringförmig verschlossen wird.

Um das Rahmenschloss 11 öffnen und schließen zu können, also den Drehbügel 21 aus der gezeigten Offenstellung in die genannte Geschlossenstellung und zurück verstellen zu können, weist das Rahmenschloss 11 in dem Aufnahmeraum 15 des Gehäuses 13 eine elektrische Antriebseinrichtung 23 in Form eines Elektromotors auf, wobei stellvertretend für die gesamte Antriebseinrichtung in den Figuren lediglich das Ausgangselement in Form eines Mitnehmers 23 gezeigt ist. Der Mitnehmer 23 ist im Wesentlichen zylindersegmentförmig ausgebildet und weist einen radial abstehenden Fortsatz 25 auf, über den der Mitnehmer 23 mit einem Koppelhebel 27 antriebswirksam koppelbar ist.

Der Koppelhebel 27 ist zweiteilig ausgebildet und umfasst eine Schieberführung 29 sowie einen in dieser Schieberführung 29 geführten Schieber 31. Dabei weisen die Schieberführung 29 und der Schieber 31 zueinander komplementäre Profile auf, durch die der Schieber 31 mit der Schieberführung 29 gekoppelt und in der Schieberführung 29 linear gleitend versetzbar ist. Der Koppelhebel 27 erstreckt sich im Wesentlichen radial von einer Drehachse D weg, um die der Mitnehmer 23 der elektrischen Antriebseinrichtung eine antreibende Verstellbewegung ausführen kann.

An einem Anlenkungspunkt 33 des Schiebers 31 des Koppelhebels 27 ist ein Verbindungshebel 35 gelenkig mit dem Koppelhebel 27 gekoppelt. Der Verbindungshebel 35 weist einen weiteren Anlenkungspunkt 37 auf, über den der Verbindungshebel 35 mit dem Drehbügel 21 gekoppelt ist. Somit bilden der mittels der Antriebseinrichtung 23 schwenkbare Koppelhebel 27 und der den Koppelhebel 27 mit dem Drehbügel 21 verbindende Verbindungshebel 35 eine Übertragungseinrichtung zur Übertragung einer Verstellbewegung der Antriebseinrichtung 23 auf den Drehbügel 21. Insbesondere stellt der Koppelhebel 27 ein Koppelelement dar, über das der Drehbügel 21 antriebswirksam mit der Antriebseinrichtung 23 koppelbar ist. Dabei ist der Koppelhebel 27 in der in Fig. 1A gezeigten Stellung des Koppelhebels 27 drehwirksam mit dem Mitnehmer 23 der elektrischen Antriebseinrichtung gekoppelt. Diese Kopplung erfolgt dadurch, dass der Fortsatz 25 in eine Aufnahme 39 des Koppelhebels 27 eingreift, so dass eine Verstellbewegung des Mitnehmers 23 um die Drehachse D zu einem Verschwenken des Koppelhebels 27 um dieselbe Drehachse D führt.

Durch den Koppelhebel 27 wird die Drehbewegung des Mitnehmers 23 zu einer Bewegung des Anlenkungspunkts 33 entlang einer Bewegungsbahn abgeleitet. Diese Bewegungsbahn des Anlenkungspunkts 33 wird dabei durch die antriebswirksame Länge des Koppelhebels 27 bestimmt, die ihrerseits durch den Abstand des Anlenkungspunkts 33 zur Drehachse D definiert ist. Da der Koppelhebel 27 als Schieberführung 29 und darin geführter Schieber 31 ausgebildet ist, ist die genannte antriebswirksame Länge des Koppelhebels 27 variabel, so dass die Bewegung des Anlenkungspunkts 33 nicht auf eine Kreisbahn um die Drehachse D eingeschränkt ist. Vielmehr ändert sich die antriebswirksame Länge des Koppelhebels 27 in Abhängigkeit von der Winkelausrichtung des Koppelhebels 27 relativ zum Gehäuse 13 des Rahmenschlosses 11.

Die winkelabhängige Änderung der antriebswirksamen Länge des Koppelhebels 27 wird durch eine Zwangsführung in Form einer Kulissenführung mit einem in einer Nut 41 geführten Zapfen 43 bewirkt. Dabei befindet sich der Zapfen 43 an dem Anlenkungspunkt 33 des Koppelhebels 27, während die Nut 41 in dem Gehäuse 13 ausgebildet ist. Vorteilhafterweise dient der Zapfen 43 nicht nur der Zwangsführung in der Nut 41, sondern zugleich der Kopplung des Koppelhebels 27 mit dem Verbindungshebel 35.

Durch den Verlauf der Nut 41 ist die antriebswirksame Länge des Koppelhebels 27 für jede vom Koppelhebel 27 einnehmbare Winkelausrichtung festgelegt. Lediglich an dem in Fig. 1A rechts dargestellten Ende der Nut 41 wird durch eine Verbreiterung der Nut 41 ein gewisses Spiel der antriebswirksamen Länge zugelassen. Dies ist im Zusammenhang mit einer Sicherung des Drehbügels 21 in seiner Geschlossenstellung mittels eines Totpunkts der Anordnung aus Koppelhebel 27 und Verbindungshebel 35 nützlich, wie im Folgenden noch beschrieben wird.

Bei der gezeigten Ausführungsform ist der Verlauf der Nut 41 derart, dass die antriebswirksame Länge des Koppelhebels 27 ausgehend von der gezeigten Stellung zunächst abnimmt, bis der Koppelhebel 27 um etwa 90° (nach unten) geschwenkt ist, und nimmt dann so weit wieder zu, dass etwa die ursprüngliche antriebswirksame Länge wieder erreicht wird, wenn die Nut 41 vollständig durchlaufen wurde. Auf diese Weise kann trotz des begrenzten Platzes im Aufnahmeraum 15 des Rahmenschlosses 11 und trotz einer Drehung des Koppelhebels 27 von weniger als 180°, nämlich von lediglich etwa 150°, eine besonders lange Bewegungsbahn des Anlenkungspunktes 33 des Koppelhebels 27 erreicht werden.

Über den Verbindungshebel 35 wird dieser lange Bewegungsverlauf des Anlenkungspunktes 33 auf den Drehbügel 21 übertragen, so dass der Drehbügel 21 um eine Strecke gedreht werden kann, die im Wesentlichen der Länge der Bewegungsbahn des Anlenkungspunktes 33, also der Länge der Nut 41, entspricht. Die so erzielte Länge reicht aus, um den Drehbügel 21 aus der Offenstellung in die Geschlossenstellung (oder zurück) zu verstellen. Durch die variable antriebswirksame Länge des Koppelhebels 27 kann somit unter Nutzung des vorhandenen Platzes eine Drehverstellbewegung der Antriebseinrichtung 23 von weniger als einer halben Umdrehung zu einer ausreichend langen Drehverstellbewegung Bewegung des Drehbügels 21 entlang der durch seine Form definierten Kreisbahn abgeleitet werden.

Vorteilhafterweise ist zwischen dem Ausgangselement der elektrischen Antriebseinrichtung (Mitnehmer 23) und dem Drehbügel 21 kein freiliegendes Zahnradgetriebe vorgesehen. Ein solches Zahnradgetriebe wäre deutlich stärker störanfällig aufgrund von Verschmutzungen als die erläuterte Übertragungseinrichtung (Koppelhebel 27 und Verbindungshebel 35) :
In einem Eckbereich des Aufnahmeraums 15, in den der den Drehbügel 21 nicht führende Schenkel 17' mündet, ist eine Klobenaufnahme 45 für einen Kloben 47 eines nicht gezeigten Sicherungsseils dargestellt. Die Klobenaufnahme 45 umfasst im Wesentlichen eine Öffnung 49 im Gehäuse 13 sowie einen nicht dargestellten Kanal, in dem der Kloben 47 zumindest teilweise eingeführt werden kann. Der Teil des Klobens 47, der sich in dem genannten Kanal der Klobenaufnahme 45 befindet, ist in Fig. 1A gestrichelt dargestellt.

Teilweise in diesen Kanal eingreifend ist ein Drehriegel 51 im Inneren des Gehäuses 13 angeordnet. Der Drehriegel 51 ist dabei im Wesentlichen als zylinderförmiger Riegelblock 53 mit einem radial abstehenden Hebelarm 55 ausgebildet.

In einem der Klobenaufnahme 45 zugewandten Abschnitt einer Mantelfläche des Riegelblocks 53 ist eine gestrichelt dargestellte Ausnehmung 57 vorgesehen, welche die Form einer tangential ausgerichteten Mulde mit einem Drehanschlag besitzt. Fig. 1A zeigt die Freigabestellung des Drehriegels 51, in der die Ausnehmung 57 derart angeordnet ist, dass der Kloben 47 den Drehriegel 51 durch die Ausnehmung 57 hindurch passieren kann und folglich ungehindert aus der Klobenaufnahme 45 heraus oder in die Klobenaufnahme 45 hinein geführt werden kann.

Der Drehriegel 51 ist um eine Schwenkachse S zwischen dieser Freigabestellung und einer Verriegelungsstellung (vgl. Fig. 2A und 3A) schwenkbar, wobei der Drehriegel 51 mittels einer nicht gezeigten Vorspanneinrichtung in Form einer Feder in die Verriegelungsstellung vorgespannt ist. Entgegen dieser Vorspannung wird der Drehriegel 51 in Fig. 1A dadurch in der Freigabestellung gehalten, dass ein an dem Koppelhebel 27 vorgesehener Zapfen 59 mit dem Hebelarm 55 zusammenwirkt und den Hebelarm 55 an einem Schwenken in die Verriegelungsstellung hindert. Das Freigeben des Klobens 47 wird also durch den Koppelhebel 27 bewirkt und erfolgt somit letztlich angetrieben durch die Antriebseinrichtung 23.

Auf diese Weise kann mittels der Antriebseinrichtung 23 in der in Fig. 1A gezeigten Stellung zugleich einerseits der Drehbügel 21 in der Offenstellung gehalten werden und andererseits der Drehriegel 51 in der gezeigten Freigabestellung gehalten werden. Zum Öffnen des Rahmenschlosses 11 kann sich also der Mitnehmer der elektrischen Antriebseinrichtung 23 in die in Fig. 1A dargestellten Stellung drehen und dadurch das Rad 19 und den Kloben 47 freigeben.

Des Weiteren weist das Rahmenschloss 11 ein Riegelelement in Form einer Riegelplatte 61 auf, die in den Fig. 1B, 2B und 3B gezeigt ist. Die Riegelplatte 61 überdeckt weite Teile des Aufnahmeraums 15 und dient somit neben der im Folgenden beschriebenen Funktion auch als Schutz der dahinter angeordneten Bestandteile des Rahmenschlosses 11 vor Zugriff von außen.

Die Riegelplatte 61 ist schwenkbar um die Schwenkachse S des Drehriegels 51 gelagert und im Wesentlichen flächig ausgebildet. In einem von der Schwenkachse S beabstandeten Endbereich weist die Riegelplatte 61 einen abgewinkelten Blockierfortsatz 63 auf, der sich in die Darstellungsebene hinein erstreckt. Zudem ist in der Riegelplatte 61 ein ungefähr C-förmiges Langloch 65 vorgesehen, dessen Verlauf etwa drei Viertel eines Ovals beschreibt.

In das Langloch 65 greift ein Zapfen 67 ein, der in dem Langloch 65 geführt wird. Der Zapfen 67 befindet sich auf einer Mitnehmerscheibe 69, die Teil des bereits in Fig. 1A gezeigten Mitnehmers 23 ist, in Fig. 1A jedoch nicht dargestellt wurde. Die Mitnehmerscheibe 69 ist größtenteils von der Riegelplatte 61 überdeckt und daher gestrichelt gezeichnet.

Bei einer Verstellbewegung der Antriebseinrichtung 23 dreht sich die Mitnehmerscheibe 69 wie auch der Fortsatz 25 (vgl. Fig. 1A) um die Drehachse D. Dabei vollzieht der Zapfen 67 aufgrund seiner exzentrischen Anordnung auf der Mitnehmerscheibe 69 eine Kreisbahn um die Drehachse D. Aufgrund des Zusammenwirkens des Zapfens 67 mit dem Langloch 65 führt eine Drehung der Mitnehmerscheibe 69 somit zu einem Schwenken der Riegelplatte 61 um die Schwenkachse S. Der Verlauf des Langlochs 65 bewirkt dabei, dass ausgehend von der in Fig. 1B gezeigten Stellung die Riegelplatte 61 zunächst von dem Drehbügel 21 weg bewegt wird und in ihrem weiteren Verlauf entlang des Langlochs 65 wieder zum Drehbügel 21 hin geschwenkt wird.

In der in Fig. 1B gezeigten Stellung der Riegelplatte 61 greift deren Blockierfortsatz 63 in eine Blockierausnehmung 71 des Drehbügels 21 ein. Insofern stellt die in Fig. 1B gezeigte Stellung der Riegelplatte 61 eine Verriegelungsstellung der Riegelplatte 61 dar. In dieser Verriegelungsstellung ist der Drehbügel 21 nämlich gegen ein Verstellen aus seiner Offenstellung in die Geschlossenstellung gesperrt.

In der in den Fig. 1A und 1B gezeigten Stellung des Rahmenschlosses 11 ist die elektrische Antriebseinrichtung 23 einerseits über den in die Aufnahme 39 eingreifenden Fortsatz 25 und andererseits über den in das Langloch 65 eingreifenden Zapfen 67 zugleich sowohl mit dem Drehbügel 21 als auch mit der Riegelplatte 61 antriebswirksam gekoppelt. Eine Verstellbewegung der Antriebseinrichtung 23 um die Drehachse D im Gegenuhrzeigersinn (bezogen auf die in den Figuren dargestellte Blickrichtung) führt aufgrund dieser antriebswirksamen Kopplungen einerseits zu einem Verschwenken des Koppelhebels 27 und - hierauf zeitlich abgestimmt - andererseits zu einem Verschwenken der Riegelplatte 61, bis der in den Fig. 2A und 2B dargestellte Zustand des Rahmenschlosses 11 erreicht ist.

Der Übergang von dem in den Fig. 1A und 1B gezeigten Zustand zu dem in den Fig. 2A und 2B gezeigten Zustand entspricht dabei einem ersten Stellbereich der Antriebseinrichtung 23. Beim Durchlaufen dieses ersten Stellbereichs ändern sich die Stellung des Koppelhebels 27, die Stellung des Drehbügels 21, die Stellung des Drehriegels 51 und die Stellung der Riegelplatte 61 ausgehend von dem in den Fig. 1A und 1B gezeigten Zustand, wie folgt.

Der Koppelhebel 27 wird um etwa 150° verschwenkt, wobei der Zapfen 43 die Nut 41 durchläuft und dabei die antriebswirksame Länge des Koppelhebels 27 winkelabhängig festlegt. Mittels des Verbindungshebels 35 wird diese Bewegung auf den Drehbügel 21 übertragen, der sich entlang der durch seine Form definierten Kreisbahn um etwa eine Vierteldrehung in seine Geschlossenstellung dreht. Am Ende dieser Stellbewegung durchläuft die Anordnung aus Koppelhebel 27 und Verbindungshebel 35 einen Totpunkt (wie nachstehend noch erläutert wird), wodurch der Drehbügel 21 in seiner Geschlossenstellung nach Erreichen einer maximalen Winkelausrichtung geringfügig zurückgezogen wird.

Infolge des Verschwenkens des Koppelhebels 27 wird zudem auch der Hebelarm 55 des Drehriegels 51 nicht länger durch den Zapfen 59 in der Freigabestellung gehalten, so dass der Drehriegel 51 aufgrund der Vorspannung um die Schwenkachse S in seine Verriegelungsstellung schwenkt. Zugleich wird die Riegelplatte 61 aufgrund der Führung des Zapfens 67 in dem Langloch 65 aus der genannten Verriegelungsstellung (Fig. 1B) geschwenkt.

Das Verschwenken der Riegelplatte erfolgt derart, dass sich der Blockierfortsatz 63 radial bezogen auf die Kreisbogenform des Drehbügels 21 von dem Drehbügel 21 wegbewegt und somit aus der Blockierausnehmung 71 heraustritt. Dadurch wird der Drehbügel 21 für das gleichzeitig stattfindende Verstellen aus der Offenstellung in die Geschlossenstellung freigegeben. Folglich nimmt die Riegelplatte 61 mit Heraustreten des Blockierfortsatzes 63 aus der Blockierausnehmung 71 im Verlauf des ersten Stellbereichs eine Freigabestellung ein.

Allerdings ist das Langloch 65 derart ausgebildet, dass sich beim Durchlaufen des ersten Stellbereichs für die Riegelplatte 61 ein Umkehrpunkt der Bewegung ergibt, so dass sich der Blockierfortsatz 63 kurz vor Erreichen der in Fig. 2B gezeigten Stellung wieder relativ zum Drehbügel 21 radial auf den Drehbügel 21 zu bewegt. Wie in Bezug auf Fig. 3B noch beschrieben wird, wird diese radiale Bewegung des Blockierfortsatzes 63 noch fortgesetzt, wenn der Zapfen 67 das Langloch 65 noch weiter bis zu dessen Ende durchläuft, so dass letztlich die Riegelplatte 61 erneut eine von der zuvor beschriebenen Verriegelungsstellung verschiedene weitere Verriegelungsstellung einnimmt, in der der Drehbügel 21 gegen ein Verstellen aus der Geschlossenstellung gesperrt ist.

Der in den Fig. 2A und 2B gezeigte Zustand stellt einen Übergangszustand im Bewegungsverlauf von dem in den Fig. 1A und 1B gezeigten Zustand zu dem in den Fig. 3A und 3B gezeigten Zustand (oder umgekehrt) dar. Denn in diesem in den Fig. 2A und 2B gezeigten Zustand wird die Antriebseinrichtung 23 trieblich von dem Drehbügel 21 entkoppelt (bzw. wieder antriebswirksam an den Drehbügel 21 gekoppelt). Die antriebswirksame Kopplung der Antriebseinrichtung 23 mit der Riegelplatte 61 bleibt dagegen unverändert erhalten.

Infolge dieses Entkoppelns (bzw. neuerlichen Koppelns) teilt der in den Fig. 2A und 2B gezeigte Zustand den Gesamtverlauf einer von der Antriebseinrichtung 23 bewirkten Verstellung des Rahmenschlosses 11 in den genannten ersten Stellbereich (zwischen dem in den Fig. 1A und 1B gezeigten Zustand und dem in den Fig. 2A und 2B gezeigten Zustand) und einen zweiten Stellbereich (zwischen dem in den Fig. 2A und 2B gezeigten Zustand und dem in den Fig. 3A und 3B gezeigten Zustand). Die Drehantriebsbewegung der Antriebseinrichtung 23 um die Drehachse D kann dabei über beide Stellbereiche und insbesondere auch beim Übergang aus dem einen in den anderen Stellbereich kontinuierlich fortlaufend erfolgen. Dabei dreht sich der Mitnehmer 23 zusammen mit dem Fortsatz 25 und dem Zapfen 67 an der Mitnehmerscheibe 69 im Verlauf des ersten Stellbereichs um etwa 180° und im Verlauf des zweiten Stellbereichs um weitere 90°.

Je nach Richtung der Antriebsbewegung findet beim Übergang zwischen den genannten Stellbereichen ein triebliches Entkoppeln oder ein antriebswirksames Koppeln der Antriebseinrichtung 23 mit dem Drehbügel 21 statt, das jeweils darauf beruht, dass der Koppelhebel 27 von der Antriebseinrichtung 23 entkoppelt bzw. an diese gekoppelt wird. Ausgehend von der in den Fig. 1A und 1B gezeigten Stellung entsprechen die ersten etwa 150° des ersten Stellbereichs dem Winkelbereich, in dem der Koppelhebel 27 von dem Mitnehmer 23 zu einer Schwenkbewegung um etwa 150° um die Drehachse D angetrieben wird. In den übrigen etwa 30° des ersten Stellbereichs führt die Verstellbewegung des Mitnehmers 23 zu dem genannten Entkoppeln bzw. Koppeln des Koppelhebels 27, ohne dass dessen Winkelausrichtung weiter verändert wird. Somit kann auch lediglich der genannte etwa 150° umfassende Winkelbereich als erster Stellbereich aufgefasst werden, während die genannten übrigen 30° einen Übergangsbereich zwischen dem ersten und dem zweiten Stellbereich darstellen.

Um das genannte Entkoppeln bzw. Koppeln zu ermöglichen, weist der Koppelhebel 27 neben der Schwenkbarkeit relativ zur Drehachse D auch einen ausrichtungsabhängigen translatorischen Freiheitsgrad auf. So kann der Koppelhebel 27 in der in Fig. 2A gezeigten Stellung im Wesentlichen linear und parallel zu seiner Längserstreckung versetzt werden. Durch dieses Versetzen tritt bei der gezeigten Ausführungsform der Fortsatz 25 der Antriebseinrichtung 23 aus der Aufnahme 39 des Koppelhebels 27 heraus, so dass der Fortsatz 25 anschließend in Richtung der in Fig. 3A gezeigten Stellung frei drehen kann, also insbesondere ohne den Koppelhebel 27 zu einer gemeinsamen Drehung anzutreiben. Bei umgekehrter Verstellrichtung führt das genannte Versetzen dazu, dass der Fortsatz 25 wieder in die Aufnahme 39 eingreift und so den Koppelhebel 27 wieder zu einer gemeinsamen Drehung mit der Antriebseinrichtung 23 koppelt.

Das Entkoppeln und das Koppeln von Antriebseinrichtung 23 und Drehbügel 21 beruhen also darauf, dass aufgrund des linearen Versetzens des Koppelhebels 27 der Fortsatz 25 aus der Aufnahme 39 heraustritt bzw. in die Aufnahme 39 eingreift. Dabei soll dieses Entkoppeln bzw. Koppeln lediglich in dem in den Fig. 2A und 2B gezeigten Übergangszustand zwischen dem ersten Stellbereich und dem zweiten Stellbereich erfolgen. Dies wird durch die Form der Achsbohrung 73 des Koppelhebels 27 im Zusammenwirken mit einer einen Führungsabschnitt 75 bildenden Wand des Gehäuses 13 erreicht.

Die Achsbohrung 73 ist derart ausgebildet, dass der Mitnehmer 23 darin radial beweglich sein kann und grundsätzlich ein lineares Versetzen des Koppelhebels 27 relativ zu dem Mitnehmer 23 in Richtung der jeweiligen Längserstreckung des Koppelhebels 27 möglich ist. Ein solches Versetzen wird jedoch etwa in der in Fig. 1A gezeigten Ausrichtung der Koppelhebels 27 durch den genannten Führungsabschnitt 75 verhindert, an dem der Koppelhebel 27 anliegt. Lediglich wenn der Koppelhebel 27 die in Fig. 2A gezeigte Ausrichtung einnimmt, sperrt der Führungsabschnitt 75 das Versetzen des Koppelhebels 27 nicht länger, und der Koppelhebel 27 kann entlang des Führungsabschnitts 75 versetzt werden.

Das tatsächliche Versetzen des Koppelhebels 27 zur Entkopplung der Antriebseinrichtung 23 von dem Drehbügel 21 erfolgt dabei angetrieben durch die Antriebseinrichtung 23 und im Zusammenwirken mit einem als Wand ausgebildeten Drehbegrenzungsabschnitt 77 des Gehäuses 13. Der Drehbegrenzungsabschnitt 77 bildet für die Schwenkbewegung des Koppelhebels 27 einen Drehanschlag, an dem der Koppelhebel nach Durchlaufen des ersten Stellbereichs anschlägt und daher nicht weiter verschwenkt werden kann. Infolgedessen führt die weitere Drehung des Mitnehmers 23 dann gleichzeitig zu dem Versetzen des Koppelhebels 27 und dem Austreten des Fortsatzes 25 aus der Aufnahme 39, so dass die antriebswirksame Kopplung zwischen der Antriebseinrichtung 23 und dem Drehbügel 21 gelöst wird. Insofern bilden der Drehbegrenzungsabschnitt 77 und der Führungsabschnitt 75 eine Umlenkeinrichtung für den Koppelhebel 27, durch den die Schwenkbewegung des Koppelhebels 27 zu dem Versetzen des Koppelhebels 27 umgelenkt wird.

Bei Umkehrung der Verstellbewegungsrichtung der Antriebseinrichtung 23 erfolgt das erneute antriebswirksame Koppeln der Antriebseinrichtung 23 mit dem Drehbügel 21 auf entsprechende Weise: Nach Durchlaufen des zweiten Stellbereichs und Erreichen der in Fig. 2A gezeigten Stellung greift der Fortsatz 25 wieder in die Aufnahme 39 ein, wodurch zugleich der Koppelhebel 27 entlang seiner Längserstreckung entlang des Führungsabschnitts 75 linear versetzt wird. Durch das Eingreifen des Fortsatzes 25 in die Aufnahme 39 sind die Antriebseinrichtung 23 und der Drehbügel 21 dann wieder gekoppelt, so dass eine weitere Drehung des Mitnehmers 23 zu einem den Drehbügel 21 in die Öffnungsstellung überführenden Verschwenken des Koppelhebels 27 weg von dem Drehbegrenzungsabschnitt 77 führt.

Die in den Fig. 2A und 3A gezeigte Geschlossenstellung des Drehbügels 21 ist auf besondere Weise gegen einen von dem Drehbügel 21 ausgehenden Manipulationsversuch zum unbefugten Öffnen des Rahmenschlosses 11 geschützt. Beim Durchlaufen des ersten Stellbereichs, durch das der Drehbügel 21 zwischen seiner Offenstellung und seiner Geschlossenstellung verstellt wird, werden der Koppelhebel 27 und der Verbindungshebel 35 aus der in Fig. 1A gezeigten Antriebsausrichtung in die in Fig. 2A gezeigte Blockierausrichtung verstellt. Dabei durchläuft die Anordnung aus Koppelhebel 27 und Verbindungshebel 35 kurz vor Erreichen der Blockierausrichtung einen Totpunkt.

In diesem Totpunkt befinden sich die Drehachse D, der Anlenkungspunkt 33 und der Anlenkungspunkt 37 auf einer Linie, deren Ausrichtung zudem der Richtung einer auf die Übertragungseinrichtung aus Koppelhebel 27 und Verbindungshebel 35 wirkenden Kraft entspricht, wenn versucht wird, den Drehbügel 21 aus seiner Geschlossenstellung in Richtung der Offenstellung zu drängen. Im Totpunkt sind also die wirksamen Längsachsen des Koppelhebels 27 (von der Drehachse D zum Anlenkungspunkt 33) und des Verbindungshebels 35 (vom Anlenkungspunkt 33 zum Anlenkungspunkt 37) in einem Winkel von 180° zueinander ausgerichtet, während sie in der Antriebsausrichtung einen geringeren Winkel und in der Blockierausrichtung einen größeren Winkel zueinander einnehmen.

Der genannte Totpunkt kann vorteilhafterweise durch eine von dem Drehbügel 21 auf den Anlenkungspunkt 37 wirkende Kraft nicht überwunden werden. Durch ein Drängen des Drehbügels 21 in Richtung der Offenstellung wird die Anordnung aus Koppelhebel 27 und Verbindungshebel 35 nämlich nicht in Richtung der Antriebsausrichtung getrieben, sondern gerade davon weg. Insofern ist die Blockierausrichtung selbsthemmend gegen ein von dem Drehbügel 21 ausgehendes Verstellen in die Antriebsausrichtung. Das Drängen führt zu einem Drehmoment auf den Koppelhebel 27 im Gegenuhrzeigersinn, durch das der Koppelhebel 27 in Richtung des Drehbegrenzungsabschnitts 77 getrieben wird. Da der Koppelhebel 27 in der Blockierausrichtung bereits an dem Drehbegrenzungsabschnitt 77 anliegt, kann er nicht weiter verschwenkt werden. Die vom Drehbügel 21 ausgehende Krafteinwirkung bleibt somit wirkungslos. Allenfalls führt eine von dem Drehbügels 21 ausgehende Krafteinwirkung aufgrund des vorgesehenen Spiels am der Blockierausrichtung entsprechenden Ende der Nut 41 und der Längenvariabilität des Koppelhebels 27 dazu, dass sich der Koppelhebel 27 geringfügig verkürzt und der Verbindungshebel 35 um dasselbe Maß im Wesentlichen entlang seiner Längserstreckung auf den Koppelhebel 27 zu versetzt wird. Diese Ausweichmöglichkeit des Verbindungshebels 35 kann bei der gezeigten Ausführungsform wie folgt dazu dienen, die Blockierwirkung der Blockierausrichtung gerade bei einem Manipulationsversuch noch zu verstärken.

Denn das Gehäuse 13 des Rahmenschlosses 11 weist eine Anschlageinrichtung in Form eines Stifts 79 auf, der das stabil in dem Gehäuse 13 angeordnet ist und sich von der (nicht gezeigten) Vorderseite bis zu der Rückseite des Gehäuses 13 erstreckt. Zudem weist der Verbindungshebel 35 einen Anschlagabschnitt 81 auf, der als Einkerbung in dem Verbindungshebel 35 ausgebildet ist.

Beim Verstellen des Verbindungshebels 35 in die Blockierausrichtung dringt der Stift 79 in den genannten Anschlagabschnitt 81 ein. Wird der Verbindungshebel 35 durch die Antriebseinrichtung 23 angetrieben wieder in die Antriebsausrichtung verstellt, kann der Stift 79 ungehindert aus dem Anschlagabschnitt 81 wieder heraustreten. Der Anschlagabschnitt 81 ist allerding derart geformt, dass bei einem linearen Versetzen des Verbindungshebels 35 in Richtung seiner Längserstreckung der Stift 79 an dem Anschlagabschnitt 81 anschlägt und dadurch zum einen ein weiteres Versetzen des Verbindungshebels 35 blockiert und zum anderen ein Verschwenken des Verbindungshebels 35 in Richtung des Totpunkts oder darüber hinaus verhindert wird. Ein Manipulationsversuch an dem Drehbügel 21 führt somit nicht zu einem Öffnen des Rahmenschlosses 11, sondern im Gegenteil sogar zu einem verstärkten Sperren des Drehbügels 21 in seiner Geschlossenstellung.

Zur weiteren Sicherung des Drehbügels 21 in seiner Geschlossenstellung weist der Verbindungshebel 35 zudem ein zusätzliches Blockierelement in Form einer aus der Zeichnungsebene nach vorne vorstehenden Zunge 83 auf. Diese ist für den Fall vorgesehen, dass sich die Kopplung des Verbindungshebels 35 mit dem Drehbügel 21 an dem Anlenkungspunkt 37 aufgrund eines Manipulationsversuchs löst. In diesem Fall ist der Drehbügel 21 zwar nicht mehr mit der Antriebseinrichtung 23 antriebswirksam gekoppelt und kann daher nicht mehr angetrieben in die Offenstellung verstellt werden. Jedoch ist der Drehbügel 21 weiterhin in der Geschlossenstellung blockiert, solange der Koppelhebel 27 und der Verbindungshebel 35 die Blockierausrichtung einnehmen. Denn die Zunge 83 verhindert als Anschlag ein Vorbeigleiten des Drehbügels 21 an dem Verbindungshebel 35.

In den Fig. 2A und 3A befindet sich ferner der Drehriegel 51 in seiner Verriegelungsstellung. Im Gegensatz zu der in Fig. 1A gezeigten Freigabestellung ist in dieser Verriegelungsstellung die Ausnehmung 57 des Drehriegels 51 nicht derart in dem Kanal der Klobenaufnahme 45 angeordnet, dass der Kloben 47 frei in die Klobenaufnahme 45 hinein oder aus der Klobenaufnahme 45 heraus bewegt werden kann. Vielmehr wird der (nicht dargestellte) Kanal der Klobenaufnahme 45 in der Verriegelungsstellung durch den Riegelblock 53 teilweise verengt und somit versperrt. Dabei greift der Riegelblock 53 des Drehriegels 51 in eine umlaufende Ringnut 85 des Klobens 47 ein, wenn sich der Kloben 47 in der Klobenaufnahme 45 befindet. Durch dieses Eingreifen des Drehriegels 51 in den Kloben 47 wird der Kloben 47 gegen ein Entnehmen aus der Klobenaufnahme 45 gesperrt.

Die Ausnehmung 57 ist allerdings derart geformt, dass ein Kloben 47 in die Klobenaufnahme 45 eingeführt werden kann, auch wenn sich der Drehriegel 51 in der Verriegelungsstellung befindet. Denn die Ausnehmung 57 ragt auch in der Verriegelungsstellung noch teilweise in den Kanal der Klobenaufnahme 45 hinein, wobei ein Randbereich der Ausnehmung 57 einen Drehanschlag 87 für einen in die Klobenaufnahme 45 einzuführenden Kloben 47 bildet. Bei Einführen des Klobens 47 in die Klobenaufnahme 45 drückt der Kloben 47 gegen den Drehanschlag 87 und kann den Drehriegel 51 dadurch gegen die den Drehriegel in die Verriegelungsstellung treibende Vorspannung kurzzeitig in die Freigabestellung verschwenken. Dadurch kann der Kloben 47 den Drehriegel 51 passieren, woraufhin der Drehriegel 51 aufgrund der Vorspannung wieder in die Verriegelungsstellung zurückschwenkt und den eingeführten Kloben 47 gegen ein Entnehmen sperrt. Diese durch die Vorspannung und die Ausbildung der Ausnehmung 57 bewirkte Rastfunktion der Klobenaufnahme 45 ermöglicht es vorteilhafterweise, den Kloben auch mit dem Riegelschloss 11 zu verbinden und daran zu sichern, wenn das Riegelschloss 11 bereits geschlossen ist, sich also der Drehriegel 21 in der Geschlossenstellung befindet.

Um den Kloben 47 auch dann in der Klobenaufnahme 45 lösbar zu halten, wenn der Drehbügel 21 sich in der Offenstellung befindet und der Drehriegel 51 die Freigabestellung einnimmt, kann optional eine zusätzliche Rasteinrichtung 89 vorgesehen sein (lediglich in Fig. 1A gezeigt). Die Rasteinrichtung 89 kann beispielsweise eine federvorgespannte Kugel oder dergleichen umfassen, welche in die Ringnut 85 des Klobens 47 rückfedernd eingreift. Somit kann der Kloben 47 beispielsweise während der Fahrt mit dem Zweirad in der Klobenaufnahme 45 gehalten werden.

Der in den Fig. 2A und 2B gezeigte Zustand des Rahmenschlosses 11 und der in den Fig. 3A und 3B gezeigte Zustand zeigen die Endstellungen des genannten zweiten Stellbereichs, in dem die Antriebseinrichtung 23 weiterhin mit der Riegelplatte 61 antriebswirksam gekoppelt, von dem Drehbügel 21 jedoch trieblich entkoppelt ist. Daher unterscheiden sich die Fig. 2A und 3A lediglich in der Stellung der Antriebseinrichtung 23 mit dem Fortsatz 25. Die Übertragungseinrichtung aus Koppelhebel 27 und Verbindungshebel 35 und der Drehriegel 21 dagegen verbleiben unverändert in der Blockierausrichtung bzw. der Geschlossenstellung.

Wie Fig. 2B und 3B zeigen, wird aber der durch den ersten Stellbereich hindurch erfolgte Bewegungsablauf der Riegelplatte 61 im zweiten Stellbereich kontinuierlich fortgesetzt. Geführt durch den Zapfen 67 in dem Langloch 65 schwenkt die Riegelplatte 61 um die Schwenkachse S in die in Fig. 3B gezeigte weitere Verriegelungsstellung. Während durch die in Fig. 1B gezeigte Verriegelungsstellung der Riegelplatte 61 der Drehbügel 21 in seiner Offenstellung gesperrt wird, dient die in Fig. 3B gezeigte Verriegelungsstellung der Riegelplatte 61 dazu, den Drehbügel 21 in seiner Geschlossenstellung zu sperren. Hierfür hintergreift der Blockierfortsatz 63 der Riegelplatte 61 das mit dem Verbindungshebel 35 gekoppelte Ende des Drehbügels 21.

Somit hat der zweite Stellbereich die Funktion, die bereits nach Durchlaufen des ersten Stellbereichs erreichte Geschlossenstellung des Drehbügels 21 noch weiter mittels der Riegelplatte 61 zu sichern.

Während das Verstellen der Riegelplatte 61 und des Drehbügels 21 in dem ersten Stellbereich synchron erfolgt, ermöglicht der zweite Stellbereich ein dem eigentlichen Schließen des Drehbügels 21 nachgeordnetes Sichern des Drehbügels 21 durch das aufgrund des Entkoppelns unabhängige weitere Verschwenken der Riegelplatte 61. Auf diese Weise wird eine besonders hohe Sicherheit des Rahmenschlosses 11 bei zugleich komfortabler Betätigung mittels einer einzelnen Antriebseinrichtung 23 erreicht.

### Bezugszeichenliste

- 11: Rahmenschloss
- 13: Gehäuse
- 15: Aufnahmeraum
- 17, 17': Schenkel
- 19: Rad
- 21: Drehbügel
- 23: Mitnehmer der elektrischen Antriebseinrichtung
- 25: Fortsatz
- 27: Koppelhebel
- 29: Schieberführung
- 31: Schieber
- 33: Anlenkungspunkt
- 35: Verbindungshebel
- 37: Anlenkungspunkt
- 39: Aufnahme
- 41: Nut
- 43: Zapfen
- 45: Klobenaufnahme
- 47: Kloben
- 49: Öffnung
- 51: Drehriegel
- 53: Riegelblock
- 55: Hebelarm
- 57: Ausnehmung
- 59: Zapfen
- 61: Riegelplatte
- 63: Blockierfortsatz
- 65: Langloch
- 67: Zapfen
- 69: Mitnehmerscheibe
- 71: Blockierausnehmung
- 73: Achsbohrung
- 75: Führungsabschnitt
- 77: Drehbegrenzungsabschnitt
- 79: Stift
- 81: Anschlagabschnitt
- 83: Zunge
- 85: Ringnut
- 87: Drehanschlag
- 89: Rasteinrichtung
- D: Drehachse
- S: Schwenkachse

## Patentansprüche

1. Rahmenschloss (11) für ein Zweirad, mit einer elektrischen Antriebseinrichtung (23), einer Übertragungseinrichtung (27, 35) und einem drehbar gelagerten Drehbügel (21), der von der Antriebseinrichtung (23) über die Übertragungseinrichtung (27, 35) zwischen einer Offenstellung und einer Geschlossenstellung verstellbar ist, wobei die Übertragungseinrichtung (27, 35) zumindest einen schwenkbaren Koppelhebel (27) umfasst, der eine variable antriebswirksame Länge aufweist.

2. Rahmenschloss nach Anspruch 1,
wobei der Koppelhebel (27) zumindest zweiteilig mit einer Schieberführung (29) und einem in der Schieberführung (29) geführten Schieber (31) ausgebildet ist.

3. Rahmenschloss nach Anspruch 1 oder 2,
wobei die antriebswirksame Länge des Koppelhebels (27) von einer Winkelausrichtung des Koppelhebels (27) innerhalb einer Normalebene zu einer Drehachse (D) der Antriebseinrichtung (23) abhängig ist.

4. Rahmenschloss nach einem der vorhergehenden Ansprüche,
wobei eine Zwangsführungseinrichtung (41, 43) vorgesehen ist, durch welche die antriebswirksame Länge des Koppelhebels (27) in Abhängigkeit von der Winkelausrichtung des Koppelhebels (27) festgelegt ist,
wobei die Zwangsführungseinrichtung (41, 43) vorzugsweise als Kulissenführung mit einem in einer Nut (41) oder einem Langloch geführten Zapfen (43) ausgebildet ist.

5. Rahmenschloss nach einem der vorhergehenden Ansprüche,
wobei die Übertragungseinrichtung (27, 35) ferner einen Verbindungshebel (35) aufweist, der mit dem Koppelhebel (27) gelenkig verbunden ist.

6. Rahmenschloss nach Anspruch 5,
wobei der Verbindungshebel (35) zwischen dem Koppelhebel (27) und dem Drehbügel (21) angeordnet und sowohl mit dem Koppelhebel (27) als auch mit dem Drehbügel (21) gelenkig verbunden ist.

7. Rahmenschloss nach Anspruch 5 oder 6,
wobei der Koppelhebel (27) und der Verbindungshebel (35) dazu angepasst sind, bei einem Verstellen des Drehbügels (21) aus der Offenstellung in die Geschlossenstellung ausgehend von einer Antriebsausrichtung einen Totpunkt zu durchlaufen und sodann eine Blockierausrichtung relativ zueinander einzunehmen.

8. Rahmenschloss nach Anspruch 7,
wobei der Koppelhebel (27) und der Verbindungshebel (35) in der Antriebsausrichtung einen Winkel von weniger als 180° relativ zueinander einnehmen und in der Blockierausrichtung einen Winkel von mehr als 180° relativ zueinander einnehmen;
und/oder
wobei der Koppelhebel (27) und der Verbindungshebel (35) dazu angepasst sind, in der Blockierausrichtung den Drehbügel (21) gegen ein Versetzen aus der Geschlossenstellung in Richtung der Offenstellung zu sperren.

9. Rahmenschloss nach Anspruch 7 oder 8,
wobei das Rahmenschloss (11) eine Anschlageinrichtung (79) aufweist, die in der Blockierausrichtung des Koppelhebels (27) und des Verbindungshebels (35) in Verlängerung des Verbindungshebels (35) angeordnet ist und dazu angepasst ist, den Verbindungshebel (35) gegen ein Versetzen entlang seiner Längserstreckung zu blockieren.

10. Rahmenschloss nach Anspruch 9,
wobei der Verbindungshebel (35) einen Anschlagabschnitt (81) aufweist, der dazu angepasst ist, an der Anschlageinrichtung (79) anzuschlagen, wenn der Koppelhebel (27) und der Verbindungshebel (35) sich in der Blockierausrichtung befinden und der Drehbügel (21) aus der Geschlossenstellung in Richtung der Offenstellung gedrängt wird.

11. Rahmenschloss nach einem der vorhergehenden Ansprüche,
wobei das Rahmenschloss (11) ferner ein Riegelelement (61) aufweist, das von der Antriebseinrichtung (23) zwischen einer Verriegelungsstellung und einer Freigabestellung verstellbar ist, wobei in einem ersten Stellbereich der Antriebseinrichtung (23) die Antriebseinrichtung (23) über die Übertragungseinrichtung (27, 35) mit dem Drehbügel (21) antriebswirksam gekoppelt ist, und wobei in einem zweiten Stellbereich der Antriebseinrichtung (23) die Antriebseinrichtung (23) von dem Drehbügel (21) trieblich entkoppelt und mit dem Riegelelement (61) antriebswirksam gekoppelt ist.

12. Rahmenschloss nach Anspruch 11,
wobei auch in dem ersten Stellbereich die Antriebseinrichtung (23) mit dem Riegelelement (61) antriebswirksam gekoppelt ist; und/oder
wobei das Riegelelement (61) dazu angepasst ist, in der Verriegelungsstellung den Drehbügel (21) gegen ein Verstellen aus der Geschlossenstellung zu sperren und vorzugsweise auch gegen ein Verstellen aus der Offenstellung zu sperren;
und/oder
wobei die Antriebseinrichtung (23) dazu angepasst ist, bei einem Übergang von dem ersten Stellbereich in den zweiten Stellbereich zwangsgeführt von dem Drehbügel (21) trieblich entkoppelt zu werden.

13. Rahmenschloss nach einem der vorhergehenden Ansprüche,
wobei die Antriebseinrichtung einen Elektromotor umfasst, der ein zu einer Drehverstellbewegung antreibbares Ausgangselement (23) aufweist, wobei die Übertragungseinrichtung (27, 35) dazu angepasst ist, eine Drehverstellbewegung des Ausgangselements (23), die höchstens eine Umdrehung beträgt, in eine vollständige Verstellbewegung des Drehbügels (21) zwischen der Offenstellung und der Geschlossenstellung zu übertragen;
und/oder
wobei die Antriebseinrichtung einen gekapselten Elektromotor umfasst, der ein zu einer Drehverstellbewegung antreibbares Ausgangselement (23) aufweist, ohne dass bezogen auf den Drehmomentübertragungspfad dem Ausgangselement (23) des Elektromotors ein Zahnradgetriebe nachgelagert ist.

14. Rahmenschloss nach einem der vorhergehenden Ansprüche,
wobei das Rahmenschloss (11) eine Klobenaufnahme (45) für einen Kloben (47) eines Sicherungsseils sowie einen Drehriegel (51) aufweist, der zwischen einer Verriegelungsstellung, in der ein in die Klobenaufnahme (45) eingeführter Kloben (47) gegen ein Entnehmen gesperrt ist, und einer Freigabestellung schwenkbar ist, in der ein in die Klobenaufnahme (45) eingeführter Kloben (47) für ein Entnehmen freigegeben ist,
wobei die Antriebseinrichtung (23) oder ein hiermit antriebswirksam gekoppeltes Element (27) dazu angepasst ist, den Drehriegel (51) zu einer Schwenkbewegung in die Freigabestellung anzutreiben, wenn der Drehbügel (21) aus der Geschlossenstellung in die Offenstellung verstellt wird.

15. Rahmenschloss nach Anspruch 14,
wobei der Drehriegel (51) in die Verriegelungsstellung vorgespannt ist;
und/oder
wobei in der Verriegelungsstellung des Drehriegels (51) ein Kloben (47) in die Klobenaufnahme (45) einrastend einführbar ist.

## Claims

1. A frame lock (11) for a two-wheeler comprising an electrical drive device (23), a transmission device (27, 35) and a rotatably supported rotatable hoop (21) which is adjustable between an open position and a closed position by the drive device (23) via the transmission device (27, 35), wherein the transmission device (27, 35) comprises at least one pivotable coupling lever (27) which has a variable drive-operative length.

2. A frame lock in accordance with claim 1,
wherein the coupling lever (27) is configured in at least two parts with a slider guide (29) and with a slider (31) guided in the slider guide (29).

3. A frame lock in accordance with claim 1 or claim 2,
wherein the drive-operative length of the coupling lever (27) is dependent on an angular orientation of the coupling lever (27) within a normal plane with respect to an axis of rotation (D) of the drive device (23).

4. A frame lock in accordance with any one of the preceding claims,
wherein a compulsory guide device (41, 43) is provided by which the drive-operative length of the coupling lever (27) is defined in dependence on the angular orientation of the coupling lever (27);
wherein the compulsory guide device (41, 43) is preferably configured as a slot guide having a pin (43) guided in a groove (41) or in an elongate hole.

5. A frame lock in accordance with any one of the preceding claims,
wherein the transmission device (27, 35) furthermore has a connection lever (35) which is connected to the coupling lever (27) in an articulated manner.

6. A frame lock in accordance with claim 5,
wherein the connection lever (35) is arranged between the coupling lever (27) and the rotatable hoop (21) and is connected in an articulated manner both to the coupling lever (27) and to the rotatable hoop (21).

7. A frame lock in accordance with claim 5 or claim 6,
wherein the coupling lever (27) and the connection lever (35) are adapted to run through a dead center on an adjustment of the rotatable hoop (21) out of the open position into the closed position, starting from a drive orientation, and then to adopt a blocking orientation relative to one another.

8. A frame lock in accordance with claim 7,
wherein the coupling lever (27) and the connection lever (35) adopt an angle relative to one another of less than 180° in the drive orientation and adopt an angle relative to one another of more than 180° in the blocking orientation;
and/or
wherein the coupling lever (27) and the connection lever (35) are adapted to block the rotatable hoop (21) against a displacement out of the closed position in the direction of the open position in the blocking orientation.

9. A frame lock in accordance with claim 7 or claim 8,
wherein the frame lock (11) has an abutment device (79) which is arranged in an extension of the connection lever (35) in the blocking orientation of the coupling lever (27) and of the connection lever (35) and which is adapted to block the connection lever (35) against a displacement along its longitudinal extent.

10. A frame lock in accordance with claim 9,
wherein the connection lever (35) has an abutment section (81) which is adapted to abut the abutment device (79) when the coupling lever (27) and the connection lever (35) are in the blocking orientation and the rotatable hoop (21) is pressed out of the closed position in the direction of the open position.

11. A frame lock in accordance with any one of the preceding claims,
wherein the frame lock (11) furthermore has a latch element (61) which is adjustable by the drive device (23) between a latched position and a release position; wherein the drive device (23) is drive-operatively coupled to the rotatable hoop (21) via the transmission device (27, 35) in a first adjustment region of the drive device (23), and wherein the drive device (23) is decoupled drive-wise from the rotatable hoop (31) and is drive-operatively coupled to the latch element (61) in a second adjustment region of the drive device (23).

12. A frame lock in accordance with claim 11,
wherein, in the first adjustment region, the drive device (23) is also drive-operatively coupled to the latch element (61);
and/or
wherein the latch element (61) is adapted to block the rotatable hoop (21) against an adjustment out of the closed position and preferably also to block it against an adjustment out of the open position in the latched position; and/or
wherein the drive device (23) is adapted to be decoupled drive-wise from the rotary hoop (21) in a forcibly guided manner on a transition from the first adjustment region into the second adjustment region.

13. A frame lock in accordance with any one of the preceding claims,
wherein the drive device comprises an electric motor which has an output element (23) drivable to make a rotary adjustment movement, with the transmission device (27, 35) being adapted to transmit a rotary adjustment movement of the output element (23) which amounts to at most one revolution into a complete adjustment movement of the rotatable hoop (21) between the open position and the closed position;
and/or
wherein the drive device comprises an encapsulated electric motor which has a starting element (23) drivable to make a rotary adjustment movement without a toothed wheel transmission being disposed downstream of the starting element (23) of the electric motor relative to the torque transmission path.

14. A frame lock in accordance with any one of the preceding claims,
wherein the frame lock (11) has a block receiver (45) for a block (47) of a securing cable as well as a rotational bolt (51) which is pivotable between a latched position, in which a block (47) introduced into the block receiver (45) is blocked against removal, and a release position, in which a block (47) introduced into the block receiver (45) is released for removal; wherein the drive device (23) or an element (27) coupled hereto in a drive-operative manner is adapted to drive the rotational bolt (51) to make a pivot movement into the release position when the rotatable hoop (21) is adjusted from the closed position into the open position.

15. A frame lock in accordance with claim 14,
wherein the rotational bolt (51) is preloaded into the latched position; and/or
wherein a block (47) can be introduced into the block receiver in a latching manner in the latched position of the rotational bolt (51).

## Revendications

1. Antivol de cadre (11) pour un deux-roues, comprenant un dispositif d'entraînement électrique (23), un dispositif de transmission (27, 35) et un arceau rotatif (21) monté en rotation, qui peut être déplacé par le dispositif d'entraînement (23) via le dispositif de transmission (27, 35) entre une position ouverte et une position fermée, dans lequel le dispositif de transmission (27, 35) comprend au moins un levier d'accouplement pivotant (27) qui présente une longueur d'entraînement efficace variable.

2. Antivol de cadre selon la revendication 1,
dans lequel le levier d'accouplement (27) est réalisé au moins en deux parties avec un guidage de coulisseau (29) et un coulisseau (31) guidé dans le guidage de coulisseau (29).

3. Antivol de cadre selon la revendication 1 ou 2,
dans lequel la longueur d'entraînement efficace du levier d'accouplement (27) dépend d'une orientation angulaire du levier d'accouplement (27) à l'intérieur d'un plan normal par rapport à un axe
de rotation (D) du dispositif d'entraînement (23).

4. Antivol de cadre selon l'une des revendications précédentes,
dans lequel il est prévu un dispositif de guidage forcé (41, 43) au moyen duquel la longueur d'entraînement efficace du levier d'accouplement (27) est déterminée en fonction de l'orientation angulaire du levier d'accouplement (27),
dans lequel le dispositif d'entraînement forcé (41, 43) est réalisé de préférence comme un guidage à glissière avec un téton (43) guidé dans une gorge (41) ou dans un trou oblong.

5. Antivol de cadre selon l'une des revendications précédentes,
dans lequel le dispositif de transmission (27, 35) comprend en outre un levier de liaison (35) qui est relié de manière articulée avec le levier d'accouplement (27).

6. Antivol de cadre selon la revendication 5,
dans lequel le levier de liaison (35) est agencé entre le levier d'accouplement (27) et l'arceau rotatif (21), et est relié de manière articulée aussi bien avec le levier d'accouplement (27) qu'avec l'arceau rotatif (21).

7. Antivol de cadre selon la revendication 5 ou 6,
dans lequel le levier d'accouplement (27) et le levier de liaison (35) sont adaptés pour, lors d'un déplacement de l'arceau rotatif (21) de la position ouverte à la position fermée, en partant d'une direction d'entraînement, traverser un point mort et ensuite pour occuper une orientation de blocage l'un par rapport à l'autre.

8. Antivol de cadre selon la revendication 7,
dans lequel le levier d'accouplement (27) et le levier de liaison (35) occupent, dans l'orientation d'entraînement, un angle de moins de 180° l'un par rapport à l'autre et occupent, dans l'orientation de blocage, un angle de plus de 180° l'un par rapport à l'autre ;
et/ou
dans lequel le levier d'accouplement (27) et le levier de liaison (35) sont adaptés pour, dans l'orientation de blocage, verrouiller l'arceau rotatif (21) à l'encontre d'un déplacement depuis la position fermée en direction de la position ouverte.

9. Antivol de cadre selon la revendication 7 ou 8,
dans lequel l'antivol de cadre (11) comprend un dispositif de butée (79) qui, dans l'orientation de blocage du levier d'accouplement (27) et du levier de liaison (35), est allongé dans le prolongement du levier de liaison (35) et qui est adapté pour bloquer le levier de liaison (35) à l'encontre d'un déplacement le long de son extension longitudinale.

10. Antivol de cadre selon la revendication 9,
dans lequel le levier de liaison (35) comprend une portion de butée (81) qui est adaptée pour venir buter contre le dispositif de butée (79) quand le levier d'accouplement (27) et le levier de liaison (35) se trouvent dans l'orientation de blocage et que l'arceau rotatif (21) est forcé hors de la position fermée en direction de la position ouverte.

11. Antivol de cadre selon l'une des revendications précédentes,
dans lequel l'antivol de cadre (11) comprend en outre un élément de verrouillage (61), qui est déplaçable par le dispositif d'entraînement (23) entre une position de verrouillage et une position de libération, dans lequel, dans une première zone de positionnement du dispositif d'entraînement (23), le dispositif d'entraînement (23) est accouplé de manière efficace vis-à-vis de l'entraînement avec l'arceau rotatif (21) via le dispositif de transmission (27, 35), et dans lequel, dans une seconde zone de positionnement du dispositif d'entraînement (23), le dispositif d'entraînement (23) est découplé en termes d'entraînement vis-à-vis de l'arceau rotatif (21) et est accouplé de manière efficace vis-à-vis de l'entraînement avec l'élément de verrouillage (61).

12. Antivol de cadre selon la revendication 11,
dans lequel également dans la première zone de positionnement, le dispositif d'entraînement (23) est accouplé de manière efficace vis-à-vis de l'entraînement avec l'élément de verrouillage (61); et/ou dans lequel l'élément de verrouillage (61) est adapté pour, dans la position de verrouillage, verrouiller l'arceau rotatif (21) à l'encontre d'un déplacement hors de la position fermée et de préférence le verrouiller également à l'encontre d'un déplacement hors de la position ouverte ;
et/ou dans lequel le dispositif d'entraînement (23) est adapté pour, lors d'une transition de la première zone de positionnement à la seconde zone de positionnement, être découplé en termes d'entraînement vis-à-vis de l'arceau rotatif (21) en étant guidé à force.

13. Antivol de cadre selon l'une des revendications précédentes,
dans lequel le dispositif d'entraînement inclut un moteur électrique qui comprend un élément de sortie (23) susceptible d'être entraîné dans un mouvement de déplacement rotatif, dans lequel le dispositif de transmission (27, 35) est adapté pour transmettre un mouvement de déplacement rotatif de l'élément de sortie (23), qui s'élève au maximum à une révolution, en un mouvement de déplacement complet de l'arceau rotatif (21) entre la position ouverte et la position fermée ;
et/ou
dans lequel le dispositif d'entraînement inclut un moteur électrique encapsulé qui comprend un élément de sortie (23) susceptible d'être entraîné en un mouvement de déplacement relatif sans prévoir un mécanisme roue dentée à la suite de l'élément de sortie (23) du moteur électrique par référence au trajet de transmission du couple de rotation.

14. Antivol de cadre selon l'une des revendications précédentes,
dans lequel l'antivol de cadre (11) comprend un récepteur d'embout (45) pour un embout (47) d'un câble de sécurité, ainsi qu'un verrou rotatif (51), qui est capable de pivoter entre une position de verrouillage dans laquelle un embout (47) introduit dans le récepteur d'embout (45) est bloqué à l'encontre d'un enlèvement, et une position de libération dans laquelle un embout (47) introduit dans le récepteur d'embout (45) est libéré pour un enlèvement,
dans lequel le dispositif d'entraînement (23) ou un élément (27) couplé de manière efficace en termes d'entraînement avec celui-ci est adapté pour entraîner le verrou rotatif (51) en un mouvement de pivotement jusque dans la position de libération quand l'arceau rotatif (21) est déplacé hors de la position fermée jusque dans la position ouverte.

15. Antivol de cadre selon la revendication 14,
dans lequel le verrou rotatif (51) est précontraint dans la position de verrouillage ;
et/ou
dans lequel, dans la position de verrouillage du verrou rotatif (51), un embout (47) est susceptible d'être introduit avec enclenchement dans le récepteur d'embout (45).
